(19) Europäisches Patentamt European Patent Office Office européen des brevets

(11) **EP 2 596 933 B1**

(12) **EUROPEAN PATENT SPECIFICATION**

(45) Date of publication and mention
of the grant of the patent:
**29.08.2018 Bulletin 2018/35**

(21) Application number: **11819650.0**

(22) Date of filing: **31.05.2011**

(51) Int Cl.:
*B29C 33/02* (2006.01)     *B29C 33/10* (2006.01)
*B29C 35/02* (2006.01)     *B60C 5/14* (2006.01)

(86) International application number:
**PCT/JP2011/062489**

(87) International publication number:
**WO 2012/026177 (01.03.2012 Gazette 2012/09)**

(54) **PNEUMATIC TIRE AND PROCESS FOR PRODUCTION THEREOF, AND TIRE CURING BLADDER**

LUFTREIFEN UND VERFAHREN ZU SEINER HERSTELLUNG SOWIE
REIFENVULKANISATIONSBALG

BANDAGE PNEUMATIQUE ET PROCÉDÉ DE FABRICATION DE CE DERNIER, ET VESSIE DE
VULCANISATION DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2010  JP 2010270473
25.08.2010  JP 2010188568**

(43) Date of publication of application:
**29.05.2013  Bulletin 2013/22**

(73) Proprietor: **Sumitomo Rubber Industries, Ltd.
Kobe-shi, Hyogo 651-0072 (JP)**

(72) Inventor: **SUGIMOTO, Mutsuki
Kobe-shi
Hyogo 651-0072 (JP)**

(74) Representative: **Manitz Finsterwald Patentanwälte
PartmbB
Martin-Greif-Strasse 1
80336 München (DE)**

(56) References cited:
**EP-A2- 1 798 075      WO-A1-2009/007064
WO-A1-2009/119232    WO-A1-2010/063427
JP-A- 11 254 446      JP-A- 2000 317 940
JP-A- 2005 280 260    JP-A- 2007 083 656
JP-A- 2008 126 509    JP-A- 2008 127 443
JP-A- 2009 143 169    JP-A- 2009 149 711
JP-A- 2010 100 082    JP-A- 2010 100 675
JP-A- 2010 527 839    JP-A- 2011 051 320
JP-Y1- 35 005 479**

EP 2 596 933 B1

**Description**

TECHNICAL FIELD

The present invention relates to a method for manufacturing a pneumatic tire, and a method for manufacturing a pneumatic tire using a tire vulcanizing bladder.

BACKGROUND ART

Recently, weight saving of tires has been under consideration because of strong social demands for fuel economy of automobiles. Weight saving has also been performed on an inner liner disposed at a tire radial inner side. An inner liner has a function of improving air permeation resistance by decreasing the amount of air leaked from the inside to the outside of a pneumatic tire (air permeation amount).

At present, for an inner liner, a rubber composition made of a butyl-based rubber containing 70 to 100% by mass of butyl rubber and 30 to 0% by mass of natural rubber is used. The butyl-based rubber contains, in addition to butylene, about 1% by mass of isoprene, which is co-crosslinked with an adjacent rubber along with sulfur, a vulcanization accelerator, and zinc white. When the butyl-based rubber is used for an inner liner, a thickness of about 0.6 to 1.0 mm is required for tires for passenger cars, and a thickness of about 1.0 to 2.0 mm is required for tires for trucks and buses.

Thus, thermoplastic resin compositions have been under consideration as a potential polymer which realizes weight saving of tires. The thermoplastic resin compositions have excellent air permeation resistance when compared with the butyl-based rubber, and can decrease the thickness of an inner liner layer.

In a conventional step of vulcanizing a pneumatic tire, a mold accommodating a bladder made of an inflatable elastic body is used. In the vulcanization step, first, a mold release agent is applied to an inner surface of a preformed unvulcanized tire. Next, the unvulcanized tire is inserted into the heated mold, and the bladder is filled with gas. By being filled with gas, the bladder expands while sliding on the inner surface of the unvulcanized tire. Then, the mold is tightened to increase pressure inside the bladder. The unvulcanized tire is pressurized by the heated mold and the expanding bladder filled with high-pressure gas, and heated by conduction of heat from the mold and the bladder. By being heated and pressurized, rubber causes a vulcanization reaction, and thus a vulcanized tire can be obtained.

When the bladder expands, the unvulcanized tire is pressurized from the inside to discharge gas existing between the unvulcanized tire and the bladder. If the gas is trapped between the inner surface of the tire and the bladder without being discharged, there occurs a phenomenon in which the gas remains in the inner surface of the tire (i.e., air-in phenomenon). Further, the remaining gas causes vulcanization failure and a fault in the tire. Thus, a plurality of concave grooves are provided from a part corresponding to a tire crown part to a part corresponding to a tire bead part in a surface of the bladder to allow the gas to be easily discharged during expansion of the bladder. These grooves are called bladder vent lines.

Here, in the case where an unvulcanized tire using a thermoplastic resin composition is preformed to manufacture a tire by the conventional vulcanization step described above, when the bladder contracts from the tire and is accommodated after completion of vulcanization, the grooves as bladder vent lines and the inner surface of the tire rub against each other, leaving flaws in the thermoplastic resin composition constituting an inner liner layer. In particular, when the inner liner layer is made of a thermoplastic resin composition having a melting point lower than a vulcanization temperature, and has a thickness of less than 1 mm, the thermoplastic resin composition is softened at the time of completion of vulcanization, and contraction of the bladder has a large influence on flaws in the inner liner layer. Further, flaws in the inner liner layer not only reduces the ability of holding the pressure inside the tire but also may lead to occurrence of a crack in the inner liner layer, which may cause a serious accident such as burst of the tire during driving.

Japanese Patent Laying-Open No. 2008-12751 (Patent Literature 1) discloses a groove width, height, groove area of bladder vent lines, a ratio of an approximate radius R1 of a contour of a corner of a bladder to an outer diameter RA of the bladder (RI/RA), a cross vent line, and the like in order to efficiently discharge gas between the bladder and an inner surface of a tire.

However, when the bladder having such bladder vent lines is used in manufacturing of an unvulcanized tire having an inner liner layer made of a thin thermoplastic resin composition, the inner liner layer may be damaged when the bladder contracts.

JP 2009-143,169 A discloses a bladder for vulcanizing a tire, with which the amount of releasant applying to the outer surface of the bladder body or to the inner surface of the unvulcanized tire is reduced, wherein because the bladder comprises a plurality of first air vent grooves formed in such a manner so as to extend from one side of the direction of the tire periphery to its other side towards one side of the direction of a tire width are provided on the outer surface of a bladder body and a plurality of second air vent grooves formed in such a manner so as to extend from one side of the direction of the tire periphery to its other side towards one side of the direction of the tire width are provided on the outer surface of the bladder body, wherein the outer surface of the bladder body is partitioned by respective air vent grooves into a plurality of regions.

EP 1 798 075 A2 relates to a pneumatic tire and noise damper assembly comprising a pneumatic tire manufactured by vulcanizing using an expandable bladder for molding an inner surface of the tire, the bladder having at least one vent groove extending on its outer surface, wherein a noise damper is attached to the inner surface of the tire and extends in the circumferential direction of the tire.

WO 2009/007064 A1 discloses a pneumatic tire provided with an inner liner comprising in an elastomer composition including as a minimum, by way of its sole elastomer or majority elastomer by weight, a thermoplastic styrene elastomer and a platy filler at a volume percentage of more than 5 %, wherein the thermoplastic styrene elastomer is preferably a polystyrene and polyisobutylene block copolymer, such as styrene/isobutylene/styrene triblock copolymer. JP 2010/527,839 A relates to a similar pneumatic tire.

Document JP 2000 317940 A discloses a bladder having channels on its surface in order to avoid the generation of scratches on the inner surface of a tire during vulcanization.

CITATION LIST

PATENT LITERATURE

PTL 1: Japanese Patent Laying-Open No. 2008-12751

SUMMARY OF INVENTION

TECHNICAL PROBLEM

One object of the present invention is to provide a method for manufacturing a pneumatic tire exhibiting excellent performance in the air-in phenomenon, flex crack adjustment, rolling resistance, and steering stability, by using a tire vulcanizing bladder capable of discharging gas between the bladder and an inner surface of the tire without damaging an inner liner in a tire vulcanization step, and the inner liner formulated to have a high adhesive strength with the tire vulcanizing bladder. Another object of the present invention is to provide a tire vulcanizing bladder capable of discharging gas between the bladder and an inner surface of a tire without damaging an inner liner layer in a tire vulcanization step.

SOLUTION TO PROBLEM

A method for manufacturing a pneumatic tire in accordance with claim 1 of the present invention uses a tire vulcanizing bladder including a plurality of vent lines, wherein the pneumatic tire includes an inner liner on an inner surface thereof, the inner liner has an SIBS layer containing a styrene-isobutylene-styrene triblock copolymer, said inner liner has at least one of an SIS layer containing a styrene-isoprene-styrene triblock copolymer and an SIB layer containing a styrene-isobutylene diblock copolymer, in addition to SIBS layer, the SIBS layer has a thickness of more than or equal to 0.05 mm and less than or equal to 0.6 mm, said SIS layer and said SIB layer have a total thickness of more than or equal to 0,01 mm and less than or equal to 0.3 mm, and at least one of said SIBS layer, said SIS layer, and said SIB layer contains more than or equal to 0.5% by mass and less than or equal to 40% by mass of a polymer obtained by polymerization of a monomer unit having 4 carbon atoms, the vent lines each include a first vent line at a part corresponding to from a tire bead toe part to a tire buttress part, and a second vent line at a part corresponding to from the tire buttress part to a tire crown part, the first vent line and the second vent line have a shape of a groove cross section having a width of more than or equal to 0.5 mm and less than or equal to 3.0 mm in a mold-side surface of the tire vulcanizing bladder, and a depth of more than or equal to 0.1 mm and less than or equal to 2.0 mm from the mold-side surface of the tire vulcanizing bladder, the first vent line and the second vent line have a groove cross sectional area of more than or equal to 0.025 $mm^2$ and less than or equal to 6.0 $mm^2$, the first vent line has an angle $\alpha$ of more than or equal to 60° and less than or equal to 90° with respect to a tangent to a part corresponding to the tire bead toe part, and the second vent line has an angle $\beta$ of more than or equal to 40° and less than or equal to 90° with respect to the tangent to the part corresponding to the tire bead toe part, and the angle $\alpha$ and the angle $\beta$ have magnitudes satisfying $\alpha>\beta$. Preferably, the SIBS layer contains more than or equal to 0.5% by mass and less than or equal to 40% by mass of a polymer obtained by polymerization of a monomer unit having 4 carbon atoms.

Preferably, the shape of the groove cross section of the first vent line and the second vent line is substantially rectangular, substantially semicircular, or substantially triangular.

Preferably, the polymer obtained by polymerization of a monomer unit having 4 carbon atoms is composed of at least one of polybutene and polyisobutylene. Preferably, the polymer obtained by polymerization of a monomer unit having 4 carbon atoms satisfies at least one of a number-average molecular weight of more than or equal to 300 and less than or equal to 3,000, a weight-average molecular weight of more than or equal to 700 and less than or equal to 100,000, and a viscosity-average molecular weight of more than or equal to 20,000 and less than or equal to 70,000.

Preferably, the SIBS layer is arranged at a radial innermost side of the pneumatic tire. Preferably, the SIS layer containing the polymer obtained by polymerization of a monomer unit having 4 carbon atoms or the SIB layer containing the polymer obtained by polymerization of a monomer unit having 4 carbon atoms is arranged in contact with a carcass layer of the pneumatic tire.

Preferably, the styrene-isobutylene-styrene triblock copolymer has a weight-average molecular weight of more than or equal to 50,000 and less than or equal to 400,000 and a styrene unit content of more than or equal to 10% by mass and less than or equal to 30% by mass.

Preferably, the styrene-isoprene-styrene triblock copolymer has a weight-average molecular weight of more than or equal to 100,000 and less than or equal to 290,000 and a styrene unit content of more than or equal to 10% by mass and less than or equal to 30% by mass.

Preferably, the styrene-isobutylene diblock copolymer is linear and has a weight-average molecular weight of more than or equal to 40,000 and less than or equal to 120,000 and a styrene unit content of more than or equal to 10% by mass and less than or equal to 35% by mass.

According to claim 11 of the present invention a pneumatic tire manufactured using a method for manufacturing a tire as described above including a plurality of vent lines includes an inner liner on an inner surface thereof, the inner liner has an SIBS layer containing a styrene-isobutylene-styrene triblock copolymer, and the SIBS layer has a thickness of more than or equal to 0.05 mm and less than or equal to 0.6 mm. Preferably, the SIBS layer contains more than or equal to 0.5% by mass and less than or equal to 40% by mass of a polymer obtained by polymerization of a monomer unit having 4 carbon atoms.

A tire vulcanizing bladder in accordance with claim 13 of the present invention includes a plurality of vent lines, said vent lines each include a first vent line at a part corresponding to from a tire bead toe part to a tire buttress part, and a second vent line at a part corresponding to from the tire buttress part to a tire crown part, the first vent line and the second vent line have a shape of a groove cross section having a width of more than or equal to 0.5 mm and less than or equal to 3.0 mm in a mold-side surface of the tire vulcanizing bladder, and a depth of more than or equal to 0.1 mm and less than or equal to 2.0 mm from the mold-side surface of the tire vulcanizing bladder, the first vent line and the second vent line have a groove cross sectional area of more than or equal to 0.025 mm$^2$ and less than or equal to 6.0 mm$^2$, the first vent line has an angle $\alpha$ of more than or equal to 60° and less than or equal to 90° with respect to a tangent to a part corresponding to the tire bead toe part, and the second vent line has an angle $\beta$ of more than or equal to 40° and less than or equal to 90° with respect to the tangent to the part corresponding to the tire bead toe part, and the angle $\alpha$ and the angle $\beta$ have magnitudes satisfying $\alpha > \beta$. Preferably, the shape of the groove cross section of the vent lines is substantially rectangular, substantially semicircular, or substantially triangular.

ADVANTAGEOUS EFFECTS OF INVENTION

According to the present invention, a method for manufacturing a pneumatic tire which discharges gas between a bladder and an inner surface of the tire without damaging an inner liner in a tire vulcanization step, and exhibits excellent performance in the air-in phenomenon, flex crack adjustment, rolling resistance, and steering stability can be provided.

According to the present invention, a tire vulcanizing bladder capable of discharging gas between the bladder and an inner surface of a tire without damaging an inner liner layer in a tire vulcanization step can be provided.

Further, a pneumatic tire having an excellent flex crack growth resistance and a reduced rolling resistance can be obtained using the tire vulcanizing bladder.

BRIEF DESCRIPTION OF DRAWINGS

Fig. 1 is a schematic cross sectional view of the right half of a pneumatic tire in accordance with one embodiment of the present invention.

Fig. 2 is a view showing a tire vulcanizing bladder in accordance with one embodiment of the present invention.

Fig. 3 is a schematic cross sectional view of vent lines in accordance with one embodiment of the present invention.

Fig. 4 shows views of the vent lines in accordance with one embodiment of the present invention.

Fig. 5 shows schematic cross sectional views of the vent lines in accordance with one embodiment of the present invention.

Fig. 6 shows views of the vent lines in accordance with one embodiment of the present invention.

Fig. 7 is a schematic cross sectional view of a polymer sheet not in accordance with one embodiment of the present invention.

Fig. 8 is a schematic cross sectional view of a polymer laminate in accordance with one embodiment of the present invention.

Fig. 9 is a schematic cross sectional view of a polymer laminate in accordance with one embodiment of the present invention.

Fig. 10 is a schematic cross sectional view of a polymer laminate in accordance with one embodiment of the present invention.

Fig. 11 is a schematic cross sectional view of a polymer laminate in accordance with one embodiment of the present invention.

DESCRIPTION OF EMBODIMENTS

<Pneumatic Tire>

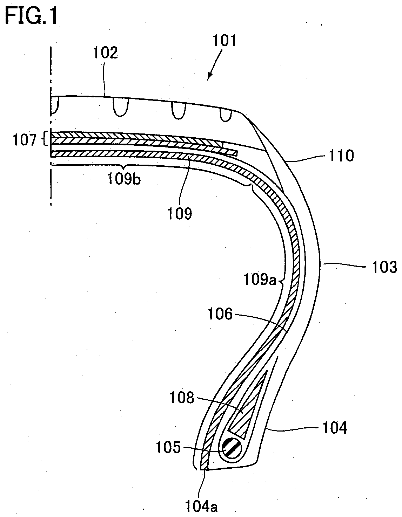

A structure of a pneumatic tire manufactured by a manufacturing method in accordance with the present invention will be described with reference to Fig. 1. A pneumatic tire 101 in accordance with the present invention is used for passenger cars, trucks and buses, and heavy-duty equipment. Pneumatic tire 101 has a crown part 102, a tire buttress part 110 continuing to a side edge of crown part 102, a sidewall part 103, and a bead part 104. Further, a bead core 105 is embedded in bead part 104. Also provided are a carcass 106 arranged to extend from one bead part 104 to the other bead part with each of opposite ends being folded back to latch bead core 105, and a belt layer 107 composed of two plies on an outer side of carcass 106 at the crown part. An inner liner 109 extending from one bead part 104 to the other bead part is disposed on a tire radial inner side of carcass 106. The two plies of belt layer 107, each being made of a steel cord or a cord of aramid fiber or the like, are arranged so that the cords intersect with each other and each form an angle of usually 5 to 30° with respect to a tire circumferential direction. Regarding the carcass, organic fiber cords made of polyester, nylon, aramid or the like are arranged at an angle of about 90° with respect to the tire circumferential direction, and a bead apex 108 extending from the top end of bead core 105 toward the sidewall is disposed in a region surrounded by the carcass and the folded part thereof. It is noted that an insulation may be disposed between inner liner 109 and carcass 106.

Inner liner 109 includes a part 109a corresponding to from a bead toe part 104a to tire buttress part 110, and a part 109b corresponding to from tire buttress part 110 to crown part 102. During tire vulcanization, part 109a of inner liner 109 corresponding to from bead toe part 104a to tire buttress part 110 comes into contact with first vent lines of a vulcanizing bladder described later, and part 109b of the inner liner corresponding to from tire buttress part 110 to tire crown part 102 comes into contact with second vent lines of the vulcanizing bladder described later.

The pneumatic tire manufactured using the vulcanizing bladder including a plurality of vent lines has inner liner 109 including a plurality of vent lines. In inner liner 109, first vent lines are formed from bead toe part 104a to tire buttress part 110, and second vent lines are formed from tire buttress part 110 to tire crown part 102. The first and second vent lines each have the shape of a convex part formed on a surface of the inner liner on a side in contact with the vulcanizing bladder. Since such a convex part is formed corresponding to a groove in the vulcanizing bladder, the convex part has a width of more than or equal to 0.5 mm and less than or equal to 3.0 mm, and a height of more than or equal to 0.1 mm and less than or equal to 2.0 mm. The convex part of the first and second vent lines has a cross sectional area of more than or equal to 0.025 $mm^2$ and less than or equal to 6.0 $mm^2$. The first vent line has an angle $\alpha$ of more than or equal to 60° and less than or equal to 90° with respect to a tangent to a part corresponding to the tire bead toe part, the second vent line has an angle $\beta$ of more than or equal to 40° and less than or equal to 90° with respect to the tangent to the part corresponding to the tire bead toe part, and angle $\alpha$ and angle $\beta$ have magnitudes satisfying $\alpha > \beta$.

In addition, the inner liner at least has an SIBS layer containing a styrene-isobutylene-styrene triblock copolymer, and the SIBS layer has a thickness of more than or equal to 0.05 mm and less than or equal to 0.6 mm. Such an SIBS layer preferably contains more than or equal to 0.5% by mass and less than or equal to 40% by mass of a polymer obtained by polymerization of a monomer unit having 4 carbon atoms. Inner liner 109 further includes at least one of an SIS layer containing a styrene-isoprene-styrene triblock copolymer and an SIB layer containing a styrene-isobutylene diblock copolymer, in addition to the SIBS layer. The SIS layer and the SIB layer have a total thickness of more than or equal to 0.01 mm and less than or equal to 0.3 mm.

The inner liner has the SIBS layer and at least one of the SIS layer and the SIB layer, the SIS layer and the SIB layer having a total thickness of more than or equal to 0.01 mm and less than or equal to 0.3 mm, and at least one of the SIBS layer, the SIS layer, and the SIB layer containing more than or equal to 0.5% by mass and less than or equal to 40% by mass of a polymer obtained by polymerization of a monomer unit having 4 carbon atoms. The SIBS layer, the SIS layer, and the SIB layer will be described later.

By manufacturing the pneumatic tire using the tire vulcanizing bladder including the plurality of vent lines for the inner liner composed of the SIBS layer or the inner liner composed of the SIBS layer and the SIS layer and/or the SIB layer as described above, it is possible to manufacture a pneumatic tire which discharges gas between the bladder and an inner surface of the tire without damaging the inner liner in a tire vulcanization step, and exhibits excellent performance in the air-in phenomenon, flex crack adjustment, rolling resistance, and steering stability.

Hereinafter, the tire vulcanizing bladder used to manufacture the pneumatic tire in accordance with the present invention will be described.

<Tire Vulcanizing Bladder>

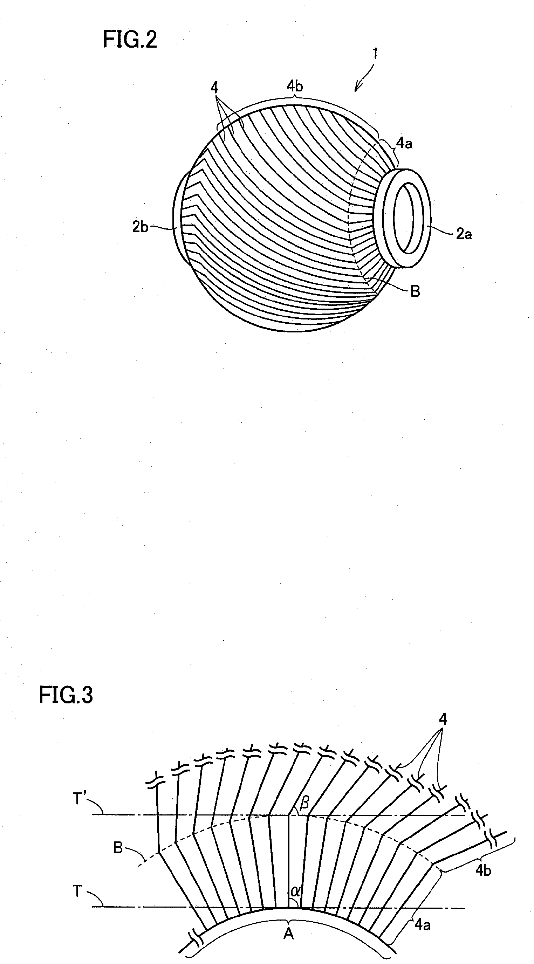

The vent lines of the tire vulcanizing bladder used in a method for manufacturing the pneumatic tire in accordance with the present invention will be described with reference to Figs. 2 to 5. In Fig. 2, flange parts 2a, 2b are provided at both ends of a tire vulcanizing bladder 1, and a plurality of vent lines 4 are provided from one flange part 2a to the other flange part 2b.

Vent lines 4 each include a first vent line 4a at a part corresponding to from the tire bead toe part to the tire buttress part, and a second vent line 4b at a part corresponding to from the tire buttress part to the tire crown part. A dotted line B indicates a boundary between first vent lines 4a and second vent lines 4b.

In Fig. 3, first vent line 4a has angle $\alpha$ of more than or equal to 60° and less than or equal to 90°, preferably more than or equal to 80° and less than or equal to 90°, with respect to a tangent T to a part A of the bladder corresponding to the tire bead toe part. When angle $\alpha$ is less than 60°, there is a large difference between a direction in which the bladder contracts and a direction of the vent lines, which may cause flaws resulting from rubbing of the bladder and the inner liner. It is noted that, concerning angle $\alpha$, since the maximum angle with respect to tangent T is 90°, a value exceeding 90° is indicated as 180° - (the value exceeding 90°). Accordingly, also in the case where angle $\alpha$ is more than 90° and less than or equal to 120°, angle $\alpha$ satisfies the condition of more than or equal to 60° and less than or equal to 90°.

Preferably, angle $\alpha$ has a magnitude changed depending on material characteristics of a thermoplastic elastomer forming the inner liner of the tire. For example, when the thermoplastic elastomer has a low melting point, and a phenomenon in which the thermoplastic elastomer is softened is considerably observed at the time of completion of the vulcanization step during manufacturing of the tire, angle $\alpha$ preferably has a larger magnitude. On the other hand, when the thermoplastic elastomer has a high melting point, and flaws resulting from rubbing of the bladder and the inner liner are less likely to occur, angle $\alpha$ can have a smaller magnitude.

Second vent line 4b has angle $\beta$ of more than or equal to 40° and less than or equal to 90°, preferably more than or equal to 45° and less than or equal to 90°, with respect to tangent T to part A of the bladder corresponding to the tire bead toe part (indicated in Fig. 3 as an angle with respect to a line T' parallel to tangent T). When angle $\beta$ is less than 40°, there is a large difference between the direction in which the bladder contracts and the direction of the vent lines, which may cause flaws resulting from rubbing of the bladder and the inner liner. It is noted that, concerning angle $\beta$, since the maximum angle with respect to tangent T is 90°, a value exceeding 90° is indicated as 180° - (the value exceeding 90°). Accordingly, also in the case where angle $\beta$ is more than 90° and less than or equal to 140°, angle $\beta$ satisfies the condition of more than or equal to 40° and less than or equal to 90°.

Preferably, angle $\beta$ has a magnitude smaller than 90° to prevent disturbance of arrangement of carcass cords in the tire buttress part.

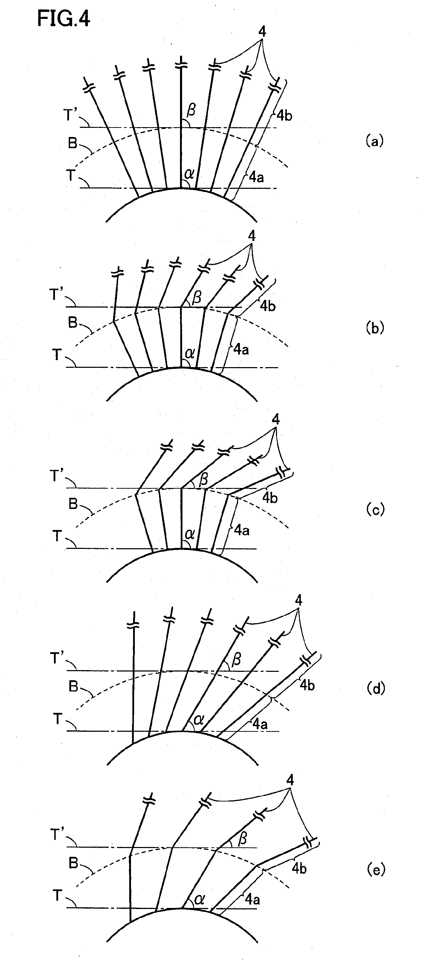

Angle $\alpha$ and angle $\beta$ have magnitudes satisfying $\alpha > \beta$. When angle $\alpha$ and angle $\beta$ have magnitudes satisfying $\alpha < \beta$, the gas between the inner surface of the tire and the bladder may not be fully discharged during the tire vulcanization step. Figs. 4(a) to 4(e) show exemplary vent lines satisfying the condition for angle $\alpha$ and angle $\beta$.

Fig. 4(a) shows the vent lines when angle $\alpha$ is 90° and angle $\beta$ is 90°.
Fig. 4(b) shows the vent lines when angle $\alpha$ is 90° and angle $\beta$ is 60°.
Fig. 4(c) shows the vent lines when angle $\alpha$ is 90° and angle $\beta$ is 40°.
Fig. 4(d) shows the vent lines when angle $\alpha$ is 60° and angle $\beta$ is 60°.
Fig. 4(e) shows the vent lines when angle $\alpha$ is 60° and angle $\beta$ is 40°.

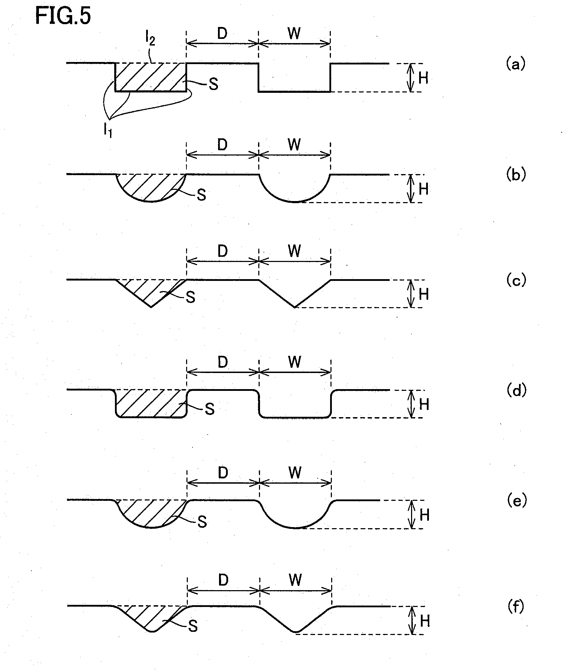

Shapes of a groove cross section of first vent line 4a and second vent line 4b will be described with reference to Fig. 5. In Fig. 5, a double arrow line W indicates a width of the groove cross section of the vent line, and a double arrow line H indicates a depth of the groove cross section of the vent line. A shaded area S indicates a groove cross sectional area of the vent line, and a double arrow line D indicates a distance between two adjacent vent lines.

In the present specification, the width of the groove cross section of the first and second vent lines means a width of the groove cross section on the same plane as a mold-side surface of the bladder. Accordingly, even if the shape of the groove cross section of the first and second vent lines is, for example, substantially semicircular or substantially triangular, and the width of the groove cross section of the first and second vent lines have different magnitudes depending on the distance from the surface of the bladder, the width of the groove cross section of the first and second vent lines means the width on the same plane as the mold-side surface of the bladder.

The width of the groove cross section of the first and second vent lines is more than or equal to 0.5 mm and less than or equal to 3.0 mm, and preferably more than or equal to 0.5 mm and less than or equal to 2.0 mm. When the width of the groove cross section of the first and second vent lines is less than 0.5 mm, lines having the shape of a convex part formed in the inner liner corresponding to a concave part for the bladder vent lines have a low strength, which may cause flaws resulting from rubbing of the bladder and the inner liner. On the other hand, when the width of the groove cross section of the first and second vent lines is more than 3.0 mm, the convex part formed in the inner liner corresponding to the concave part for the bladder vent lines has a larger volume, and weight saving of the tire may not be able to be achieved.

Here, the depth of the groove cross section of the first and second vent lines means a distance from the same plane as the mold-side surface of the bladder, at a part having the greatest distance in the vertical direction from the surface of the bladder. Accordingly, when the shape of the groove cross section of the first and second vent lines is, for example, substantially semicircular or substantially triangular, and the depth from the surface of the bladder is not constant, the depth of the groove cross section of the first and second vent lines means the distance at the part having the greatest distance from the surface of the bladder. Specifically, when the shape of the groove cross section of the first and second vent lines is substantially semicircular, the depth of the groove cross section of the first and second vent lines is indicated by double arrow line H in Fig. 5(b) or 5(e). When the shape of the groove cross section of the first and second vent lines is substantially triangular, the depth of the groove cross section of the first and second vent lines is indicated by double arrow line H in Fig. 5(c) or 5(f).

The depth of the groove cross section of the first and second vent lines is more than or equal to 0.1 mm and less than or equal to 2.0 mm, and preferably more than or equal to 0.5 mm and less than or equal to 1.5 mm. When the depth of the groove cross section of the first and second vent lines is less than 0.1 mm, the gas between the inner surface of the tire and the bladder may not be fully discharged during the tire vulcanization step. On the other hand, when the depth of the groove cross section of the first and second vent lines is more than 2.0 mm, the convex part formed in the inner liner corresponding to the concave part for the bladder vent lines has a larger volume, and weight saving of the tire may not be able to be achieved.

The groove cross sectional area of the first and second vent lines means an area of a part surrounded by a line forming a groove and a line connecting both ends of the line forming the groove on the same plane as the mold-side surface of the bladder, in the groove cross section. For example, when a description is given with reference to Fig. 5(a), groove cross sectional area $S$ of the first and second vent lines is an area of a part surrounded by a line $l_1$ forming a groove and a line $l_2$ connecting both ends of the line forming the groove on the same plane as the surface of the bladder, in the groove cross section.

The groove cross sectional area of the first and second vent lines is more than or equal to 0.025 mm$^2$ and less than or equal to 6.0 mm$^2$, and preferably more than or equal to 0.05 mm$^2$ and less than or equal to 5.0 mm$^2$. When the groove cross sectional area of the first and second vent lines is less than 0.025 mm$^2$, the gas between the inner surface of the tire and the bladder may not be fully discharged during the tire vulcanization step. On the other hand, when the groove cross sectional area of the first and second vent lines is more than 6.0 mm$^2$, the convex part formed in the inner liner corresponding to the concave part for the bladder vent lines has a larger volume, and weight saving of the tire may not be able to be achieved.

The distance between two adjacent vent lines is not particularly limited as long as the gas between the inner surface of the tire and the bladder is fully discharged during the tire vulcanization step. The distance between two adjacent vent lines is preferably, for example, more than or equal to 2.0 mm and less than or equal to 6.0 mm, and more preferably more than or equal to 2.5 mm and less than or equal to 5.0 mm. When the distance between two adjacent vent lines is less than 2.0 mm, the convex part formed in the inner liner corresponding to the concave part for the bladder vent lines has a larger volume, and weight saving of the tire may not be able to be achieved. On the other hand, when the distance between two adjacent vent lines is more than 6.0 mm, the gas between the inner surface of the tire and the bladder may not be fully discharged during the tire vulcanization step.

Preferably, the shape of the groove cross section of the first and second vent lines is, for example, substantially rectangular shown in Fig. 5(a), substantially semicircular shown in Fig. 5(b), or substantially triangular shown in Fig. 5(c). Further, the shape of the groove cross section of the first and second vent lines can be, for example, substantially rectangular, substantially semicircular, or substantially triangular with corners rounded and chamfered as shown in Figs. 5(d) to 5(f).

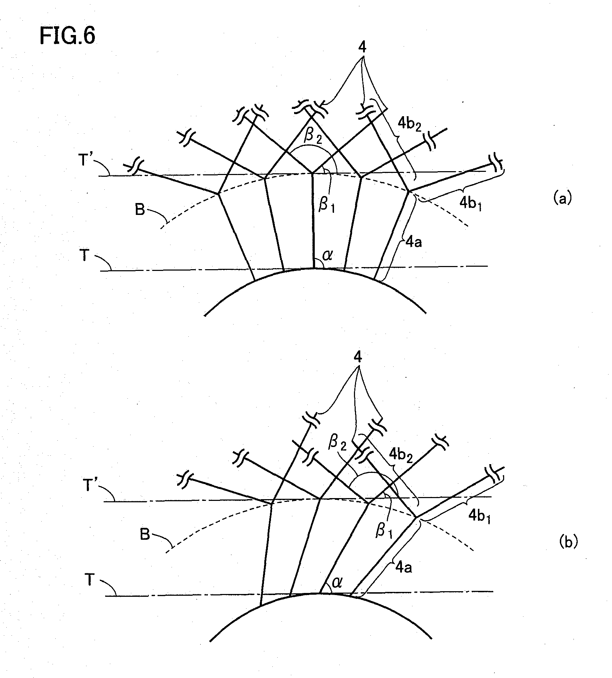

Vent lines having the second vent lines different in form from the first and second vent lines fabricated above will be described with reference to Fig. 6.

The second vent lines shown in Figs. 6(a) and 6(b) each include a vent line $4b_1$ having an angle of $\beta_1$ and a vent line $4b_2$ having an angle of $\beta_2$ with respect to tangent T to part A of the bladder corresponding to the tire bead toe part (indicated in Figs. 6(a) and 6(b) as angles with respect to line T' parallel to tangent T). The effect of discharging gas can be enhanced by forming two second vent lines having different angles with respect to tangent T.

When angle $\beta_1$ and angle $\beta_2$ have magnitudes satisfying $\beta_1 \leq \beta_2$, angle $\beta_1$ has an angle of more than or equal to 40° and less than or equal to 90°, preferably more than or equal to 45° and less than or equal to 90°, with respect to tangent T to part A of the bladder corresponding to the tire bead toe part. On the other hand, when measured in the same direction as angle $\beta_1$, angle $\beta_2$ has an angle of more than 90° and less than or equal to 140°, preferably more than 90° and less than or equal to 135°, with respect to tangent T.

Angle $\alpha$ of the first vent line with respect to tangent T to part A of the bladder corresponding to the tire bead toe part, angle $\beta_1$, and angle $\beta_2$ have magnitudes satisfying $\alpha > \beta_1$ and $\alpha > \beta_2$. When the relation among the magnitudes of angle $\alpha$, angle $\beta_1$, and angle $\beta_2$ is not satisfied, the gas between the inner surface of the tire and the bladder may not be fully discharged during the tire vulcanization step.

Figs. 6(a) and 6(b) show exemplary vent lines satisfying the above condition for angle $\alpha$, angle $\beta_1$, and angle $\beta_2$. Fig. 6(a) shows the vent lines when angle $\alpha$ is 90°, angle $\beta_1$ is 40°, and angle $\beta_2$ is 140°. Fig. 6(b) shows the vent lines when angle $\alpha$ is 60°, angle $\beta_1$ is 40°, and angle $\beta_2$ is 140°.

<Inner Liner>

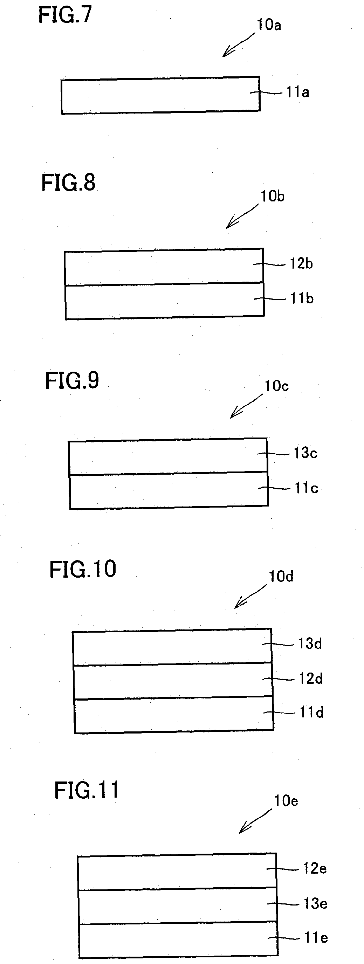

The inner liner used for the pneumatic tire may be a single-layer polymer sheet as shown in Fig. 7 (not according to the invention), or according to the invention a multi-layer polymer laminate as shown in Figs. 8 to 11. Both in the case where the inner liner is a single-layer polymer sheet and in the case where the inner liner is a multi-layer polymer laminate, the first vent lines are formed from bead toe part 104a to tire buttress part 110, and the second vent lines are formed from tire buttress part 110 to tire crown part 102.

<Inner Liner Composed of Single-layer Polymer Sheet>

As shown in Fig. 7 (not according to the invention), a polymer sheet 10a is made of an SIBS layer 11a containing a styrene-isobutylene-styrene triblock copolymer (hereinafter also referred to as SIBS).

(SIBS Layer)

SIBS layer 11a contains more than or equal to 0.5% by mass and less than or equal to 40% by mass of a polymer obtained by polymerization of a monomer unit having 4 carbon atoms. When the content of the polymer obtained by polymerization of a monomer unit having 4 carbon atoms is less than 0.5% by mass, vulcanization adhesive strength with the carcass or the insulation may be reduced, and when the content of the polymer is more than 40% by mass, air permeation resistance may be reduced, further reducing viscosity, which may cause deterioration in extrusion moldability. The content of the polymer is preferably more than or equal to 5% by mass and less than or equal to 20% by mass. On the other hand, the content of the SIBS in SIBS layer 11a is preferably more than or equal to 60% by mass and less than or equal to 99.5% by mass. When the content of the SIBS is less than 60% by mass, air permeation resistance may be reduced, and when the content of the SIBS is more than 99.5% by mass, vulcanization adhesive strength with the carcass or the insulation may be reduced. Therefore, both the cases are not preferred. The content of the SIBS is more preferably more than or equal to 80% by mass and less than or equal to 95% by mass.

The SIBS layer may contain a rubber component and sulfur, in addition to the SIBS described above. By adding a rubber component and sulfur to the SIBS and mixing them by heating, the rubber component and sulfur produce a vulcanization reaction during mixing by heating to form a sea-island structure in which the SIBS serves as a matrix (sea), and the rubber component serves as an island.

The SIBS layer having the sea-island structure has air shutoff properties originating in a matrix phase composed of the SIBS. Further, the rubber component constituting an island phase has tackiness before vulcanization with an adjacent member containing a rubber component, and vulcanization adhesiveness with the adjacent member because of the vulcanization reaction produced with the rubber component of the adjacent member during mixing by heating. Therefore, when the SIBS layer is used for the inner liner, the inner liner has excellent air shutoff properties, and has tackiness before vulcanization and vulcanization adhesiveness with the adjacent member.

Further, the SIBS content in a polymer component contained in the SIBS layer is preferably more than or equal to 5% by mass and less than or equal to 40% by mass. When the SIBS content is less than 5% by mass, air shutoff properties of the polymer sheet may deteriorate. On the other hand, when the SIBS content is more than 40% by mass, vulcanization adhesive strength with an adjacent member may be insufficient. The SIBS content is more preferably more than or equal to 10% by mass and less than or equal to 30% by mass of the polymer component, from the viewpoint of ensuring air shutoff properties. Preferably, the SIBS layer contains a polymer component containing, in addition to the SIBS described above, more than or equal to 60% by mass and less than or equal to 95% by mass of a rubber component of at least one kind selected from the group consisting of natural rubber, isoprene rubber, and butyl rubber, and more than or equal to 0.1 part by mass and less than or equal to 5 parts by mass of sulfur with respect to 100 parts by mass of the polymer component.

The thickness of SIBS layer 11a is more than or equal to 0.05 and less than or equal to 0.6 mm. When the thickness of SIBS layer 11a is less than 0.05 mm, the SIBS layer may be broken by a pressing pressure during vulcanization of a green tire in which the polymer sheet is used as the inner liner, and thus an air leak phenomenon may occur in the resultant tire. On the other hand, when the thickness of SIBS layer 11a is more than 0.6 mm, tire weight increases and fuel efficiency performance deteriorates. The thickness of SIBS layer 11a is more preferably more than or equal to 0.05 mm and less than or equal to 0.4 mm.

SIBS layer 11a can be obtained by a conventional method of forming a thermoplastic resin and a thermoplastic elastomer into a sheet. For example, SIBS layer 11a can be obtained by performing extrusion molding or calender molding on the SIBS.

With reference to Fig. 1, when polymer sheet 10a is used as inner liner 109 in pneumatic tire 101, SIBS layer 11a can be vulcanization-bonded with carcass 106 in the tire vulcanization step. Therefore, resultant pneumatic tire 101 can prevent the air-in phenomenon and have excellent air permeation resistance, since inner liner 109 is satisfactorily bonded with a rubber layer of carcass 106.

(Styrene-Isobutylene-Styrene Triblock Copolymer: SIBS)

Because of an isobutylene block of an SIBS, a polymer sheet containing the SIBS has excellent air permeation resistance. Therefore, when a polymer sheet containing an SIBS is used for an inner liner, a pneumatic tire having excellent air permeation resistance can be obtained.

Further, the SIBS has excellent durability since a molecular structure other than those of aromatic molecules is completely saturated and therefore deterioration and hardening are suppressed. Therefore, when a polymer sheet containing the SIBS is used for the inner liner, a pneumatic tire having excellent durability can be obtained.

When a pneumatic tire is manufactured by using a polymer sheet containing the SIBS for the inner liner, a halogenated rubber having high specific gravity (for example, halogenated butyl rubber), which has been conventionally used to impart air permeation resistance, is not used, since air permeation resistance can be ensured by containing the SIBS. Even if the halogenated rubber is used, the amount of use can be reduced. This enables weight saving of the tire and achieves the effect of improving fuel efficiency.

Although there is no particular limitation on the molecular weight of the SIBS, the weight-average molecular weight obtained by a GPC measurement is preferably more than or equal to 50,000 and less than or equal to 400,000 in view of fluidity, the molding step, rubber elasticity, and the like. When the weight-average molecular weight is less than 50,000, tensile strength and tensile elongation may decrease. When the weight-average molecular weight is more than 400,000, extrusion moldability may deteriorate. Therefore, both the cases are not preferred.

The SIBS usually contains more than or equal to 10% by mass and less than or equal to 40% by mass of a styrene unit. Since air permeation resistance and durability become more satisfactory, the content of the styrene unit in the SIBS is preferably more than or equal to 10% by mass and less than or equal to 30% by mass.

In the SIBS, a molar ratio of an isobutylene unit to a styrene unit (isobutylene unit/styrene unit) is preferably from 40/60 to 95/5 in view of the rubber elasticity of the copolymer. In the SIBS, the polymerization degree of each block is preferably from about 10,000 to 150,000 for an isobutylene block, and preferably from about 5,000 to 30,000 for a styrene block, in view of rubber elasticity and handling. When the polymerization degree of each block is less than 10,000, the SIBS becomes a liquid, and thus is not preferable.

The SIBS can be obtained by a conventional polymerization method for a vinyl-based compound and, for example, can be obtained by a living cationic polymerization method.

Japanese Patent Laying-Open No. 62-048704 and Japanese Patent Laying-Open No. 64-062308 disclose that living cationic polymerization of isobutylene with other vinyl compounds can be performed, and a polyisobutylene-based block copolymer can be manufactured by using isobutylene and other compounds as the vinyl compounds. In addition, a method for manufacturing a vinyl compound polymer by a living cationic polymerization method is described, for example, in U.S. Patent No. 4,946,899, U.S. Patent No. 5,219,948, and Japanese Patent Laying-Open No. 03-174403.

The SIBS does not have a double bond other than an aromatic double bond in the molecule and therefore has higher stability to ultraviolet rays than a polymer having a double bond in the molecule, such as polybutadiene, resulting in satisfactory weatherability.

(Rubber Component)

The SIBS layer may contain a rubber component. The rubber component provides the thermoplastic elastomer with tackiness before vulcanization with an adjacent member containing a rubber component. Further, because of the vulcanization reaction with sulfur, the rubber component can provide the thermoplastic elastomer with vulcanization adhesiveness with an adjacent member such as the carcass or the insulation.

The rubber component contains at least one kind selected from the group consisting of natural rubber, isoprene rubber, and butyl rubber, and particularly preferably contains natural rubber from the viewpoint of breaking strength and adhesiveness.

The content of the rubber component is preferably more than or equal to 60% by mass and less than or equal to 95% by mass of the polymer component in the SIBS layer. When the content of the rubber component is less than 60% by mass, the viscosity of the thermoplastic elastomer increases to cause deterioration in extrusion moldability, so that when fabricating the polymer sheet for the inner liner, the polymer sheet may not be able to be made thin. On the other hand, when the content of the rubber component is more than 95% by mass, air shutoff properties of the polymer sheet may deteriorate. The content of the rubber component is more preferably more than or equal to 70% by mass and less than or equal to 90% by mass of the polymer component, from the viewpoint of tackiness before vulcanization and vulcanization adhesiveness.

(Sulfur)

The SIBS layer can contain sulfur. As sulfur, sulfur generally used in the rubber industry for vulcanization may be used, and it is preferable to use insoluble sulfur. As used herein, insoluble sulfur refers to sulfur obtained by heating and rapidly cooling natural sulfur $S_8$, and polymerizing it so as to become Sx (x = 100,000 to 300,000). The use of insoluble sulfur can prevent blooming that would usually occur when sulfur is used as a rubber vulcanization agent.

The content of sulfur is preferably more than or equal to 0.1 part by mass and less than or equal to 5 parts by mass with respect to 100 parts by mass of the polymer component. When the content of sulfur is less than 0.1 part by mass, the vulcanization effect of the rubber component cannot be achieved. On the other hand, when the content of sulfur is more than 5 parts by mass, the hardness of the thermoplastic elastomer increases, and when the polymer sheet is used for the inner liner, the durability performance of the pneumatic tire may deteriorate. The content of sulfur is more preferably more than or equal to 0.3 part by mass and less than or equal to 3.0 parts by mass.

(Additive)

The SIBS layer can contain additives such as stearic acid, zinc oxide, an antioxidant, and a vulcanization accelerator.

Stearic acid functions as a vulcanization assistant for the rubber component. The content of stearic acid is preferably more than or equal to 1 part by mass and less than or equal to 5 parts by mass with respect to 100 parts by mass of the polymer component. When the content of stearic acid is less than 1 part by mass, the effect as a vulcanization assistant cannot be achieved. On the other hand, when the content of stearic acid is more than 5 parts by mass, the viscosity of the thermoplastic elastomer may be reduced, and the breaking strength may be reduced. Therefore, both the cases are not preferred. The content of stearic acid is more preferably more than or equal to 1 part by mass and less than or equal to 4 parts by mass.

Zinc oxide functions as a vulcanization assistant for the rubber component. The content of zinc oxide is preferably more than or equal to 0.1 part by mass and less than or equal to 8 parts by mass with respect to 100 parts by mass of the polymer component. When the content of zinc oxide is less than 0.1 part by mass, the effect as a vulcanization assistant cannot be achieved. On the other hand, when the content of zinc oxide is more than 8 parts by mass, the hardness of the thermoplastic elastomer increases, and when the polymer sheet is used for the inner liner, the durability performance of the pneumatic tire may deteriorate. The content of zinc oxide is more preferably more than or equal to 0.5 part by mass and less than or equal to 6 parts by mass.

An antioxidant has the function of preventing a series of degradations called aging, such as oxidation degradation, thermal degradation, ozone degradation, and fatigue degradation. Antioxidants are classified into a primary antioxidant composed of amines or phenols and a secondary antioxidant composed of sulfur compounds or phosphites. The primary antioxidant has the function of supplying hydrogen to various polymer radicals to stop a chain reaction of autooxidation, and the secondary antioxidant exhibits a stabilizing effect by turning hydroxyperoxide into stable alcohol.

The antioxidant includes amines, phenols, imidazoles, phosphors, thioureas, and the like.

Amines include phenyl-$\alpha$-naphthylamine, 2,2,4-trimethyl-1,2-dihydroquinoline polymer, 6-ethoxy-2,2,4-trimethyl-1,2-dihydroquinoline, p,p'-dioctyldiphenylamine, p,p'-dicumyldiphenylamine, N,N'-di-2-naphthyl-p-phenylenediamine, N,N'-diphenyl-p-phenylenediamine, N-phenyl-N'-isopropyl-p-phenylenediamine, N-phenyl-N'-1,3-dimethylbutyl-p-phenylenediamine, N-(1,3-dimethylbutyl)-N'-phenyl-p-phenylenediamine, and the like.

Phenols include 2,6-di-tert-butyl-4-methylphenol, 2,6-di-tert-butyl-4-methylphenol, styrenated methylphenol, 2,2'-methylene bis (4-ethyl-6-tert-butylphenol), 2,2'-methylene bis (4-methyl-6-tert-butylphenol), 4,4'-butylidenebis (3-methyl-6-tertbutylphenol), 4,4'-thiobis (3-methyl-6-tert-butylphenol), 2,5-di-tert-butyl-hydroquinone, 2,5-di-tert-amyl hydroquinone, and the like.

Imidazoles include 2-mercaptobenzimidazole, zinc salt of 2-mercaptobenzimidazole, nickel dibutyldithiocarbamate, and the like.

In addition, phosphors such as tris (nonylphenyl) phosphite, thioureas such as 1,3-bis (dimethylaminopropyl)-2-thiourea and tributyl thiourea, an antiozonant wax, and the like may be used.

One kind of the above-mentioned antioxidants may be used solely, or two or more kinds may be used in combination. Particularly, it is preferable to use N-(1,3-dimethylbutyl)-N'-phenyl-p-phenylenediamine.

The content of the antioxidant is preferably more than or equal to 0.1 part by mass and less than or equal to 5 parts by mass with respect to 100 parts by mass of the polymer component. When the content of the antioxidant is less than 0.1 part by mass, the antioxidant effect cannot be achieved. On the other hand, when the content of the antioxidant is more than 5 parts by mass, the blooming phenomenon will occur in a thermoplastic resin composition. The content of the antioxidant is more preferably more than or equal to 0.3 part by mass and less than or equal to 4 parts by mass.

As the vulcanization accelerator, thiurams, thiazoles, thioureas, dithiocarbamates, guanidines, sulfenamides, and the like can be used.

Thiurams include tetramethylthiuram monosulfide, tetramethylthiuram disulfide, tetraethylthiuram disulfide, tetrabutylthiuram disulfide, dipentamethylenethiuram tetrasulfide, and the like.

Thiazoles include 2-mercaptobenzothiazole, dibenzothiazyl disulfide, N-cyclohexylbenzothiazole, N-cyclohexyl-2-benzothiazole sulfenamide, N-oxydiethylene-2-benzothiazole sulfenamide, N-tert-butyl-2-benzothiazole sulfenamide, N,N-dicyclohexyl-2-benzothiazole sulfenamide, N-tert-butyl-2-benzothiazolylsulfenamide, and the like.

Thioureas include N,N'-diethylthiourea, ethylenethiourea, trimethylthiourea, and the like.

Dithiocarbamates include zinc dimethyldithiocarbamate, zinc diethyldithiocarbamate, zinc dibutyldithiocarbamate, sodium dimethyldithiocarbamate, sodium diethyldithiocarbamate, copper dimethyldithiocarbamate, iron (III) dimethyldithiocarbamate, selenium diethyldithiocarbamate, tellurium diethyldithiocarbamate, and the like.

Guanidines include di-o-tolylguanidine, 1,3-diphenylguanidine, 1-o-tolylbiguanide, di-o-tolylguanidine salt of dicatecholborate, and the like.

Sulfenamides include N-cyclohexyl-2-benzothiazyl sulfenamide, and the like. One kind of the above-mentioned vulcanization accelerators may be used solely, or two or more kinds may be used in combination. Particularly, it is preferable to use dibenzothiazyl disulfide.

The content of the vulcanization accelerator is preferably more than or equal to 0.1 part by mass and less than or equal to 5 parts by mass with respect to 100 parts by mass of the polymer component. When the content of the vulcanization accelerator is less than 0.1 part by mass, the vulcanization acceleration effect cannot be achieved. On the other hand, when the content of the vulcanization accelerator is more than 5 parts by mass, the hardness of the thermoplastic resin composition increases, and when the polymer sheet is used for the inner liner, the durability performance of the pneumatic tire may deteriorate. In addition, the raw material cost of the thermoplastic resin composition increases. The content of the vulcanization accelerator is more preferably more than or equal to 0.3 part by mass and less than or equal to 4 parts by mass.

(Polymer Obtained by Polymerization of Monomer Unit Having 4 Carbon Atoms)

SIBS layer 11a preferably contains a polymer obtained by polymerization of a monomer unit having 4 carbon atoms. The polymer contains a low molecular weight component, which can improve unvulcanization tack strength and vulcanization adhesive strength of the SIBS layer with another polymer sheet or rubber layer without degrading air permeation resistance originating in the SIBS. Therefore, using SIBS layer 11a containing that polymer for an inner liner part of the tire can improve adhesive strength with an adjacent rubber layer constituting a carcass or insulation, and prevent the air-in phenomenon between the inner liner and the carcass or between the inner liner and the insulation. Further, by improving vulcanization adhesive strength between the inner liner and the carcass or between the inner liner and the insulation as described above, interlayer rigidity can be enhanced, and thus steering stability can be improved.

The number-average molecular weight of the polymer obtained by polymerization of a monomer unit having 4 carbon atoms obtained by a GPC measurement is preferably more than or equal to 300 and less than or equal to 3,000, and more preferably more than or equal to 500 and less than or equal to 2,500. The weight-average molecular weight of that polymer obtained by a GPC measurement is preferably more than or equal to 700 and less than or equal to 100,000, and more preferably more than or equal to 1,000 and less than or equal to 80,000. The viscosity-average molecular weight of that polymer obtained by a FCC measurement is preferably more than or equal to 20,000 and less than or equal to 70,000, and more preferably more than or equal to 30,000 and less than or equal to 60,000.

The polymer obtained by polymerization of a monomer unit having 4 carbon atoms includes polybutene, polyisobutylene, and so forth.

Polybutene is a copolymer having a molecular structure of long chain hydrocarbon mainly composed of isobutene as a monomer unit, with normal butene being further used, and obtained by causing them to react with each other. Hydrogenated polybutene may also be used as polybutene.

Polyisobutylene is a copolymer having a molecular structure of long chain hydrocarbon composed of isobutene as a monomer unit and obtained by polymerization thereof.

<Inner Liner Composed of Polymer Laminate>

(Embodiment 1)

Fig. 8 is a schematic cross sectional view showing an exemplary polymer laminate used for the inner liner in accordance with the present invention.

A polymer laminate 10b in accordance with the present embodiment has an SIBS layer 11b containing an SIBS and an SIS layer 12b containing a styrene-isoprene-styrene triblock copolymer (hereinafter also referred to as SIS). SIBS layer 11b has a thickness of more than or equal to 0.05 mm and less than or equal to 0.6 mm, as with the above.

(SIS Layer)

The SIS layer can be obtained by mixing the SIS, sulfur, and other additives with a Banbury mixer, and then forming the mixture into a sheet by a conventional method of forming a thermoplastic elastomer into a sheet, such as extrusion molding or calender molding.

The thickness of SIS layer 12b is more than or equal to 0.01 mm and less than or equal to 0.3 mm. When the thickness of SIS layer 12b is less than 0.01 mm, SIS layer 12b may be broken by a pressing pressure during vulcanization of a green tire in which the polymer sheet is used as the inner liner, and thus vulcanization adhesive strength may decrease. On the other hand, when the thickness of SIS layer 12b is more than 0.3 mm, tire weight increases and fuel efficiency performance deteriorates. The thickness of SIS layer 12b is more preferably more than or equal to 0.05 mm and less than or equal to 0.2 mm. The SIS layer can be obtained by forming the SIS into a sheet by a conventional method of forming a thermoplastic resin or a thermoplastic elastomer into a sheet, such as extrusion molding or calender molding.

With reference to Fig. 1, when polymer laminate 10b is used as inner liner 109 of pneumatic tire 101, if a surface in which SIBS layer 11b exists is arranged toward a tire radial innermost side, and a surface in which SIS layer 12b exists is arranged toward a tire radial outer side so as to contact carcass 106, SIS layer 12b and carcass 106 can be vulcanization-bonded in the tire vulcanization step. Therefore, the resultant pneumatic tire 101 can prevent the air-in phenomenon and have further excellent air permeation resistance and durability, since inner liner 109 is satisfactorily bonded with the rubber layer of carcass 106.

(Styrene-Isobutylene-Styrene Triblock Copolymer: SIBS)

As the SIBS and the polymer obtained by polymerization of a monomer unit having 4 carbon atoms, those as described above can be used. Therefore, the styrene-isoprene-styrene triblock copolymer will be described below.

(Styrene-Isoprene-Styrene Triblock Copolymer: SIS)

Since an isoprene block of a styrene-isoprene-styrene triblock copolymer is a soft segment, a polymer sheet containing the SIS is easily vulcanization-bonded with a rubber component. Therefore, when the polymer sheet containing the SIS is used for the inner liner, the inner liner is excellent in adhesiveness with an adjacent rubber constituting a carcass or an insulation, for example, and thus a pneumatic tire that can prevent the air-in phenomenon and present excellent durability can be obtained.

Although there is no particular limitation on the molecular weight of the SIS, the weight-average molecular weight obtained by the GPC measurement is preferably more than or equal to 100,000 and less than or equal to 290,000 in view of rubber elasticity and moldability. When the weight-average molecular weight is less than 100,000, tensile strength may decrease. When the weight-average molecular weight is more than 290,000, extrusion moldability may deteriorate. Therefore, both the cases are not preferred.

The content of a styrene unit in the SIS is preferably more than or equal to 10% by mass and less than or equal to 30% by mass in view of tackiness, adhesiveness, and rubber elasticity.

In the SIS, a molar ratio of an isoprene unit to a styrene unit (isoprene unit/styrene unit) is preferably from 90/10 to 70/30. In the SIS, the polymerization degree of each block is preferably from about 500 to 5,000 for an isoprene block, and preferably from about 50 to 1,500 for a styrene block, in view of rubber elasticity and handling.

The SIS can be obtained by a conventional polymerization method for a vinyl-based compound and, for example, can be obtained by a living cationic polymerization method.

(Polymer Obtained by Polymerization of Monomer Unit Having 4 Carbon Atoms)

When the polymer laminate includes SIBS layer 11b and SIS layer 12b as described above, at least one of SIBS layer 11b and SIS layer 12b contains more than or equal to 0.5% by mass and less than or equal to 40% by mass of the polymer obtained by polymerization of a monomer unit having 4 carbon atoms. Specifically, this applies to the cases in which: (a) SIBS layer 11b contains that polymer and SIS layer 12b does not; (b) SIBS layer 11b does not contain that polymer and SIS layer 12b does; and (c) both of SIBS layer 11b and SIS layer 12b contain that polymer. Among the cases (a) to (c), the case (c) is preferable in terms of high adhesive strength.

When SIBS layer 11b contains the polymer obtained by polymerization of a monomer unit having 4 carbon atoms, the content of each of the SIBS and the polymer is preferably more than or equal to 0.5% by mass and less than or equal to 40% by mass.

When SIS layer 12b contains the polymer obtained by polymerization of a monomer unit having 4 carbon atoms, the content of the polymer is preferably more than or equal to 0.5% by mass and less than or equal to 40% by mass. When the content of the polymer is less than 0.5% by mass, vulcanization adhesive strength with the carcass or the insulation may be reduced, and when the content of the polymer is more than 40% by mass, air permeation resistance may be reduced, further reducing viscosity, which may cause deterioration in extrusion moldability. Therefore, both the cases are not preferred. The content of the polymer is more preferably more than or equal to 5% by mass and less than or equal to 20% by mass. On the other hand, the SIS content in SIS layer 12b is preferably more than or equal to 60% by mass and less than or equal to 99.5% by mass. When the SIS content is less than 60% by mass, viscosity may be reduced, which may cause deterioration in extrusion moldability, and when the SIS content is more than 99.5% by mass, vulcanization adhesive strength with the carcass or the insulation may be reduced. Therefore, both the cases are not preferred. The SIS content is more preferably more than or equal to 80% by mass and less than or equal to 95% by mass.

(Embodiment 2)

Fig. 9 is a schematic cross sectional view showing an exemplary polymer laminate used for the inner liner in accordance with the present invention.

A polymer laminate 10c in accordance with the present embodiment has an SIBS layer 11c containing an SIBS and an SIB layer 13c containing a styrene-isobutylene diblock copolymer (hereinafter also referred to as SIB). Preferably, SIBS layer 11c has a thickness of more than or equal to 0.05 mm and less than or equal to 0.6 mm, as with the above.

(SIB Layer)

The SIB layer in accordance with the present embodiment can be obtained by mixing the SIB, sulfur, and other additives with a Banbury mixer, and then forming the mixture into a sheet by a conventional method of forming a thermoplastic resin or a thermoplastic elastomer into a sheet, such as extrusion molding or calender molding.

The thickness of SIB layer 13c is preferably more than or equal to 0.01 mm and less than or equal to 0.3 mm. When the thickness of SIB layer 13c is less than 0.01 mm, SIB layer 13c may be broken by a pressing pressure during vulcanization of a green tire in which the polymer sheet is used as the inner liner, and thus vulcanization adhesive strength may decrease. On the other hand, when the thickness of SIB layer 13c is more than 0.3 mm, tire weight increases and fuel efficiency performance deteriorates. The thickness of SIB layer 13c is more preferably more than or equal to 0.05 mm and less than or equal to 0.2 mm. The SIB layer can be obtained by forming the SIB into a sheet by a conventional method of forming a thermoplastic resin or a thermoplastic elastomer into a sheet, such as extrusion molding or calender molding.

With reference to Fig. 1, when polymer laminate 10c is used as inner liner 109 of pneumatic tire 101, if a surface in which SIBS layer 11c exists is arranged toward the tire radial innermost side, and a surface in which SIB layer 13c exists is arranged toward the tire radial outer side so as to contact carcass 106, SIB layer 13c and carcass 106 can be vulcanization-bonded in the tire vulcanization step. Therefore, the resultant pneumatic tire 101 can prevent the air-in phenomenon and have further excellent air permeation resistance and durability, since inner liner 109 is satisfactorily bonded with the rubber layer of carcass 106.

(Styrene-Isobutylene-Styrene Triblock Copolymer: SIBS)

As the SIBS and the polymer obtained by polymerization of a monomer unit having 4 carbon atoms, those as described above can be used. Hereinafter, the styrene-isobutylene diblock copolymer will be described.

(Styrene-Isobutylene Diblock Copolymer: SIB)

Since an isobutylene block of a styrene-isobutylene diblock copolymer is a soft segment, a polymer sheet containing the SIB is easily vulcanization-bonded with a rubber component. Therefore, when the polymer sheet containing the SIB is used for the inner liner, the inner liner is excellent in adhesiveness with an adjacent rubber constituting a carcass or an insulation, for example, and thus a pneumatic tire that can prevent the air-in phenomenon and present excellent durability can be obtained.

It is preferable to use one having a linear chain as the SIB in view of rubber elasticity and adhesiveness.

Although there is no particular limitation on the molecular weight of the SIB, the weight-average molecular weight obtained by the GPC measurement is preferably more than or equal to 40,000 and less than or equal to 120,000 in view of rubber elasticity and moldability. When the weight-average molecular weight is less than 40,000, tensile strength may decrease. When the weight-average molecular weight is more than 120,000, extrusion moldability may deteriorate. Therefore, both the cases are not preferred.

The content of a styrene unit in the SIB is preferably more than or equal to 10% by mass and less than or equal to 35% by mass in view of tackiness, adhesiveness, and rubber elasticity.

In the SIB, a molar ratio of an isobutylene unit to a styrene unit (isobutylene unit/styrene unit) is preferably from 90/10 to 65/35. In the SIB, the polymerization degree of each block is preferably from about 300 to 3,000 for an isobutylene block, and preferably from about 10 to 1,500 for a styrene block, in view of rubber elasticity and handling.

The SIB can be obtained by a conventional polymerization method for a vinyl-based compound and, for example, can be obtained by a living cationic polymerization method.

International Publication No. WO 2005/033035 discloses a manufacturing method in which methylcyclohexane, n-butyl chloride, and cumyl chloride are charged in a stirrer, cooled to -70°C and thereafter reacted for 2 hours, and then the reaction is terminated by adding a large amount of methanol, and the reaction product is vacuum-dried at 60°C to obtain an SIB.

(Polymer Obtained by Polymerization of Monomer Unit Having 4 Carbon Atoms)

At least one of SIBS layer 11c and SIB layer 13c contains more than or equal to 0.5% by mass and less than or equal to 40% by mass of the polymer obtained by polymerization of a monomer unit having 4 carbon atoms. Specifically, this applies to the cases in which: (a) SIBS layer 11c contains that polymer and SIB layer 13c does not; (b) SIBS layer 11c does not contain that polymer and SIB layer 13c does; and (c) both of SIBS layer 11c and SIB layer 13c contain that polymer. Among the cases (a) to (c), the case (c) is preferable in terms of high adhesive strength.

When SIBS layer 11c contains the polymer obtained by polymerization of a monomer unit having 4 carbon atoms, the content of each of the SIBS and the polymer is preferably more than or equal to 0.5% by mass and less than or equal to 40% by mass.

When SIB layer 13c contains the polymer obtained by polymerization of a monomer unit having 4 carbon atoms, the content of the polymer is preferably more than or equal to 0.5% by mass and less than or equal to 40% by mass. When the content of the polymer is less than 0.5% by mass, vulcanization adhesive strength with the carcass or the insulation may be reduced, and when the content of the polymer is more than 40% by mass, air permeation resistance may be reduced, further reducing viscosity, which may cause deterioration in extrusion moldability. Therefore, both the cases are not preferred. The content of the polymer is more preferably more than or equal to 5% by mass and less than or equal to 20% by mass. On the other hand, the SIB content in SIB layer 13c is preferably more than or equal to 60% by mass and less than or equal to 99.5% by mass. When the SIB content is less than 60% by mass, viscosity may be reduced, which may cause deterioration in extrusion moldability, and when the SIB content is more than 99.5% by mass, vulcanization adhesive strength with the carcass or the insulation may be reduced. Therefore, both the cases are not preferred. The SIB content is more preferably more than or equal to 80% by mass and less than or equal to 95% by mass.

Instead of the SIS layer in Embodiment 1 and the SIB layer in Embodiment 2, an elastomer layer composed of a thermoplastic elastomer may be provided. Such an elastomer layer can contain a thermoplastic elastomer of at least one kind selected from the group consisting of: a styrene-butadiene-styrene triblock copolymer; a styrene-isoprene●butadiene-styrene triblock copolymer; a styrene-ethylene●butene-styrene triblock copolymer; a styrene-ethylene●propylene-styrene triblock copolymer; a styrene-ethylene●ethylene●propylene-styrene triblock copolymer; and a styrene-butadiene●butylene-styrene triblock copolymer. It is noted that these thermoplastic elastomers may be epoxy-modified thermoplastic elastomers having an epoxy group.

The SIS layer, the SIB layer, and the elastomer layer described above can contain additives such as stearic acid, zinc oxide, an antioxidant, and a vulcanization accelerator.

The content of stearic acid is preferably more than or equal to 1 part by mass and less than or equal to 5 parts by mass with respect to 100 parts by mass of a polymer component. When the content of stearic acid is less than 1 part by mass, vulcanization may not occur. On the other hand, when the content of stearic acid is more than 5 parts by mass, the breaking strength of a thermoplastic resin composition may deteriorate. The content of stearic acid is more preferably more than or equal to 1 part by mass and less than or equal to 4 parts by mass.

The content of zinc oxide is preferably more than or equal to 0.1 part by mass and less than or equal to 8 parts by mass with respect to 100 parts by mass of the polymer component. When the content of zinc oxide is less than 0.1 part by mass, vulcanization may not occur. On the other hand, when the content of zinc oxide is more than 8 parts by mass, the hardness of the thermoplastic resin composition may increase, and durability may deteriorate. The content of zinc oxide is more preferably more than or equal to 0.5 part by mass and less than or equal to 6 parts by mass.

The content of the antioxidant is preferably more than or equal to 0.1 part by mass and less than or equal to 5 parts by mass with respect to 100 parts by mass of the polymer component. When the content of the antioxidant is less than 0.1 part by mass, the antioxidant effect may not be able to be achieved. On the other hand, when the content of the antioxidant is more than 5 parts by mass, the blooming phenomenon may occur. The content of the antioxidant is more preferably more than or equal to 0.3 part by mass and less than or equal to 4 parts by mass.

The content of the vulcanization accelerator is preferably more than or equal to 0.1 part by mass and less than or equal to 5 parts by mass with respect to 100 parts by mass of the polymer component. When the content of the vulcanization accelerator is less than 0.1 part by mass, the vulcanization acceleration effect may not be able to be achieved. On the other hand, when the content of the vulcanization accelerator is more than 5 parts by mass, the hardness of the thermoplastic resin composition may increase, and durability may deteriorate. In addition, the raw material cost of the thermoplastic resin composition increases. The content of the vulcanization accelerator is more preferably more than or equal to 0.3 part by mass and less than or equal to 4 parts by mass.

(Embodiment 3)

Fig. 10 is a schematic cross sectional view showing an exemplary polymer laminate used for the inner liner in accordance with the present invention.

A polymer laminate 10d in accordance with the present embodiment has an SIBS layer 11d containing an SIBS, an SIS layer 12d containing an SIS, and an SIB layer 13d containing an SIB. SIBS layer 11d, SIS layer 12d, and SIB layer 13d are stacked in the above order. Further, in addition to SIBS layer 11d, SIS layer 12d, and SIB layer 13d, a rubber composition layer made of, for example, urethane rubber or silicone rubber can be included. In this case, the rubber composition layer is preferably arranged between SIBS layer 11d and SIS layer 12d, between SIBS layer 11d and SIB layer 13d, or between SIS layer 12d and SIB layer 13d.

The thickness of SIBS layer 11c is preferably more than or equal to 0.05 mm and less than or equal to 0.6 mm. SIS layer 12d and SIB layer 13d have a total thickness of more than or equal to 0.01 mm and less than or equal to 0.3 mm. When the total thickness of SIS layer 12d and SIB layer 13d is less than 0.01 mm, SIS layer 12d and SIB layer 13d may be broken by a pressing pressure during vulcanization of a green tire in which the polymer sheet is used as the inner liner, and thus vulcanization adhesive strength may decrease. On the other hand, when the total thickness of SIS layer 12d and SIB layer 13d is more than 0.3 mm, tire weight increases and fuel efficiency performance deteriorates. The total thickness of SIS layer 12d and SIB layer 13d is more preferably more than or equal to 0.05 mm and less than or equal to 0.2 mm.

With reference to Fig. 1, when polymer laminate 10d is used as inner liner 109 of pneumatic tire 101, if a surface in which SIBS layer 11d exists is arranged toward the tire radial innermost side, and a surface in which SIB layer 13d exists is arranged toward the tire radial outer side so as to contact carcass 106, SIB layer 13d and carcass 106 can be vulcanization-bonded in the tire vulcanization step. Therefore, the resultant pneumatic tire 101 can prevent the air-in phenomenon and have further excellent air permeation resistance and durability since inner liner 109 is satisfactorily bonded with the rubber layer of carcass 106.

As the SIBS, the SIS, the SIB, and the polymer obtained by polymerization of a monomer unit having 4 carbon atoms, those as described above can be used.

(Polymer Obtained by Polymerization of Monomer Unit Having 4 Carbon Atoms)

In the present embodiment, at least one of SIBS layer 11d, SIS layer 12d, and SIB layer 13d contains more than or equal to 0.5% by mass and less than or equal to 40% by mass of the polymer obtained by polymerization of a monomer unit having 4 carbon atoms. Specifically, this applies to the cases in which: (a) only SIBS layer 11d contains that polymer; (b) only SIS layer 12d contains that polymer; (c) only SIB layer 13d contains that polymer; (d) SIBS layer 11d and SIS layer 12d contain that polymer, and SIB layer 13d does not; (e) SIBS layer 11d and SIB layer 13d contain that polymer, and SIS layer 12d does not; (f) SIS layer 12d and SIB layer 13d contain that polymer, and SIBS layer 11d does not; and (g) all of SIBS layer 11d, SIS layer 12d, and SIB layer 13d contain that polymer. Among the cases (a) to (g), the case (d) is preferable in terms of high adhesive strength and low cost.

When SIBS layer 11d contains the polymer obtained by polymerization of a monomer unit having 4 carbon atoms, the content of each of the SIBS and the polymer can be made similar to that of the polymer sheet described above.

When SIS layer 12d and SIB layer 13d contain the polymer obtained by polymerization of a monomer unit having 4 carbon atoms, the content of each of the SIS and the polymer can be made similar to that in Embodiments 1 and 2.

(Embodiment 4)

Fig. 11 is a schematic cross sectional view showing an exemplary polymer laminate used for the inner liner in accordance with the present invention.

A polymer laminate 10e in accordance with the present embodiment has an SIBS layer 11e containing an SIBS, an SIB layer 13e containing an SIB, and an SIS layer 12e containing an SIS. SIBS layer 11e, SIB layer 13e, and SIS layer 12e are stacked in the above order. At least one of SIBS layer 11e, SIS layer 12e, and SIB layer 13e contains more than or equal to 0.5% by mass and less than or equal to 40% by mass of a polymer obtained by polymerization of a monomer unit having 4 carbon atoms.

Polymer laminate 10e in accordance with the present embodiment can be configured similarly to the counterpart of Embodiment 3 except that the SIS layer and the SIB layer are stacked in the different order.

<Method for Manufacturing Polymer Laminate>

The polymer laminate in accordance with one embodiment of the present invention can be obtained by coextrusion of pellets of an SIBS, an SIS, and an SIB with a T-die extruder. Further, the SIBS layer, the SIS layer, and the SIB layer can be obtained by lamination extrusion such as laminate extrusion or coextrusion of the SIBS layer, the SIS layer, and the SIB layer in the order described in, for example, any one of Embodiments 2 to 4.

When the SIBS layer contains the SIBS, a rubber component, and sulfur, the respective ingredients are charged into a twin-screw extruder and kneaded under the conditions of about 150 to 280°C and 50 to 300 rpm, thereby obtaining pellets of a thermoplastic elastomer in which the SIBS, the rubber component, sulfur, and various additives as necessary are dynamically crosslinked. The obtained pellets are charged into a T-die extruder to obtain a polymer sheet of desired thickness.

In the twin-screw extruder, the SIBS serves as the matrix phase, and the rubber component serves as the island phase and is dispersed. Further, in the twin-screw extruder, the rubber component reacts with the additive component, and the rubber component serving as the island phase produces a crosslinking reaction. Since the rubber component is dynamically crosslinked in the twin-screw extruder, it is called dynamic crosslinking. Even if the rubber component is dynamically crosslinked in the twin-screw extruder, the shear viscosity of the whole system is low and extrusion molding is possible since the matrix phase of the system is composed of a thermoplastic resin component.

In the pellets of the dynamically-crosslinked thermoplastic elastomer obtained with the twin-screw extruder, the rubber component is crosslinked, however, the thermoplastic elastomer component of the matrix phase holds plasticity, and serves to produce plasticity of the whole system. Therefore, the thermoplastic elastomer also exhibits plasticity in T-die extrusion, and thus can be molded into a sheet shape.

Further, since the rubber component is crosslinked in the pellets of the dynamically-crosslinked thermoplastic elastomer, the thermoplastic elastomer of the inner liner can be prevented from penetrating into the cords of a carcass layer even when the pneumatic tire is heated while the pneumatic tire is manufactured using the polymer sheet fabricated from the pellets as the inner liner.

<Method for Manufacturing Pneumatic Tire>

The pneumatic tire in accordance with the present invention can be manufactured by the following method.

A green tire in which the polymer sheet or the polymer laminate fabricated above is used for the inner liner part is fabricated. In the case of using the polymer laminate, the polymer laminate is arranged toward the tire radial outer side such that the second layer contacts the carcass or the insulation. With such an arrangement, the second layer can be vulcanization-bonded with an adjacent member such as the carcass or the insulation in the tire vulcanization step. Therefore, the resultant pneumatic tire can have excellent air permeation resistance and durability since the inner liner is satisfactorily bonded with the adjacent member.

Then, it is preferable to mount the green tire in a mold, press the green tire by applying heat and pressure at 150 to 180°C for 3 to 50 minutes using the tire vulcanizing bladder for forming the pneumatic tire in accordance with the present invention, cool the bladder at 50 to 120°C for 10 to 300 seconds without removing the tire from the vulcanizing mold, and thereafter remove the tire from the vulcanizing mold.

In the pneumatic tire, the polymer sheet or the polymer laminate described above is used for the inner liner. Since the SIBS, the SIS, the SIB, and the like constituting the polymer sheet or the polymer laminate are thermoplastic elastomers, they are softened in the mold when heated to 150 to 180°C, for example, in the step of obtaining the vulcanized tire. The softened thermoplastic elastomer has higher reactivity than in the solid state, and is thus fused with an adjacent member. That is, the inner liner in contact with the outside surface of the expanding bladder is softened by heating and fused with the bladder. When an attempt is made to remove the vulcanized tire from the mold in a state where the inner liner is fused with the outside surface of the bladder, the inner liner peels off the insulation or the carcass adjacent thereto, causing the air-in phenomenon. Further, the tire may be deformed in shape.

Therefore, by rapidly cooling the temperature inside the bladder at 120°C or lower for 10 or more seconds while maintaining the pressurized state without opening the vulcanizing mold after the pressurization and vulcanization, the thermoplastic elastomer used for the inner liner can be solidified. When the thermoplastic elastomer is solidified, fusing of the inner liner with the bladder is eliminated, and thus releasability when removing the vulcanized tire from the mold is improved.

The cooling temperature is preferably from 50 to 120°C. When the cooling temperature is lower than 50°C, it is necessary to prepare a special cooling medium, which may degrade productivity. When the cooling temperature is higher than 120°C, the thermoplastic elastomer may not be sufficiently cooled, which causes the inner liner to be still fused with the bladder upon opening of the mold, giving rise to the air-in phenomenon. The cooling temperature is more preferably from 70 to 100°C.

The cooling time is preferably from 10 to 300 seconds. When the cooling time is less than 10 seconds, the thermoplastic elastomer may not be sufficiently cooled, which causes the inner liner to be still fused with the bladder upon opening of the mold, giving rise to the air-in phenomenon. When the cooling time is more than 300 seconds, productivity deteriorates. The cooling time is more preferably from 30 to 180 seconds.

The step of cooling the vulcanized tire is preferably performed by cooling the inside of the bladder. Since a cavity exists inside the bladder, it is possible to introduce a cooling medium controlled to the cooling temperature into the bladder generally after completion of the vulcanization step, without reducing the pressure inside the bladder.

When the processing advances to the cooling step after completion of applying heat and pressure, it is preferable to advance to the cooling step without reducing the pressure inside the bladder. This is because, when the pressure inside the bladder is reduced after completion of applying heat and pressure, the thermoplastic elastomer is softened, and thus a reduction in pressure may cause a change in gauge, deformation, or occurrence of a void. It is noted that it is also possible to carry out the step of cooling the vulcanized tire by disposing a cooling structure in the mold, in addition to cooling the inside of the bladder.

It is preferable to use, as a cooling medium, at least one selected from the group consisting of air, steam, water, and oil. Of these, water having excellent cooling efficiency is preferably used.

Examples

<Examples 1 to 35, Comparative Examples 1 to 9>

(Fabrication of Polymer Sheet and Polymer Laminate)

The respective ingredients in accordance with formulations shown in Table 1 were charged into a twin-screw extruder (screw diameter: φ 50 mm; L/D: 30; cylinder temperature: 200°C), and kneaded at 200 rpm to obtain pellets (Manufacturing Examples 1 to 8). The obtained pellets were charged into a co-extruder (cylinder temperature: 200°C) to manufacture polymer sheets or polymer laminates having structures shown in Tables 3 to 6.

[Table 1]

| | | | Manufacturing examples | | | | | | |
|---|---|---|---|---|---|---|---|---|---|
| | | | 1 | 2 | 3 | 4 | 5 | 6 | 7 |
| Formulation (parts by mass) | SIBS | (*1) | 100 | - | - | 100 | 100 | - | - |
| | SIS | (*2) | - | 100 | - | - | - | 100 | - |
| | SIB | (*3) | - | - | 100 | - | - | - | 100 |
| | Polyisobutylene | (*4) | - | - | - | 0.5 | 40 | 0.5 | 40 |

(*1) SIBS: "SIBSTAR 102T" manufactured by Kaneka Corporation (a styrene-isobutylene-styrene triblock copolymer, weight-average molecular weight of 100,000, styrene unit content of 25% by mass, Shore A hardness of 25)

(*2) SIS: "D1161JP" manufactured by Kraton Performance Polymers Inc. (a styrene-isoprene-styrene triblock copolymer, weight-average molecular weight of 150,000, styrene unit content of 15% by mass)

(*3) SIB: In a 2L reaction vessel equipped with a stirrer, 589 mL of methylcyclohexane (dried over molecular sieves), 613 mL of n-butyl chloride (dried over molecular sieves), and 0.550 g of cumyl chloride were charged. After cooling the reaction vessel to −70°C, 0.35 mL of α-picoline (2-methylpyridine) and 179 mL of isobutylene were added. Further, 9.4 mL of titanium tetrachloride was added to start polymerization, and then the solution was reacted for 2.0 hours while being stirred at −70°C. Next, 59 mL of styrene was added into the reaction vessel and the reaction was continued for 60 minutes, and then the reaction was terminated by adding a large amount of methanol. After removing the solvent and the like from the reaction solution, a polymer was dissolved in toluene and washed twice with water. This toluene solution was added to the methanol mixture, thereby precipitating the polymer, and the resultant polymer was dried at 60°C for 24 hours to obtain a styrene-isobutylene diblock copolymer (weight-average molecular weight of 70,000, styrene unit content of 15% by mass)

(*4) Polyisobutylene: "Tetrax 3T" manufactured by Nippon Oil Corporation (weight-average molecular weight of 49,000, viscosity-average molecular weight of 30,000)

<Manufacturing of Pneumatic Tire>

Each obtained polymer sheet or polymer laminate was used for the inner liner part of a pneumatic tire to prepare a green tire. It is noted that the polymer laminate was arranged so that the first layer was located at the radial innermost side of the green tire and the second layer contacted a carcass layer of the green tire. The green tire was subjected to press molding in a mold at 170°C for 20 minutes, using a tire vulcanizing bladder having bladder vent lines in the shape shown in Tables 3 to 6, and cooled at 100°C for 3 minutes without opening the vulcanizing mold and without reducing the pressure inside the bladder. Thereafter, the vulcanized tire was removed from the mold to manufacture the vulcanized tire of 195/65R15 size, and thus a pneumatic tire was obtained.

Using the obtained pneumatic tire, the following evaluations were performed.

((a) Vulcanization Adhesive Strength of First Layer)

The first layer and the carcass layer as well as the first layer and an unvulcanized rubber sheet of the second layer were bonded together, and were heated at 170°C for 20 minutes to obtain a sample for measuring vulcanization adhesive strength. Peel force was measured in a tensile peel test as vulcanization adhesive strength. The obtained value was expressed as an index by the following equation, for vulcanization adhesive strength of the first layer in each example and each comparative example, using the value in Example 1 as a reference value (100). It shows that the greater the value, the greater the vulcanization adhesive strength, which is preferable.

$$(\text{vulcanization adhesive strength index}) = (\text{vulcanization adhesive strength in each example and each comparative example})/(\text{vulcanization adhesive strength in Example 1})\times 100$$

((b) Flaws in Inner Liner)

Flaws in the inner liner on the inside of the vulcanized tire were visually examined, and judged on the following criteria. It is noted that the sizes of the flaws are not taken into consideration.

A: In appearance, per tire, the number of flaws in the inner liner was 0.
B: In appearance, per tire, the number of flaws in the inner liner was one or more.

((c) Presence or Absence of Air-in Portions)

The inside of the tire after the vulcanization and cooling steps was examined, and evaluated on the following criteria.

A: In appearance, per tire, the number of air-in portions with a diameter of 5 mm or less and the number of air-in portions with a diameter of more than 5 mm were both 0.
B: In appearance, per tire, the number of air-in portions with a diameter of 5 mm or less was one to three, and the number of air-in portions with a diameter of more than 5 mm was 0.
C: In appearance, per tire, the number of air-in portions with a diameter of 5 mm or less was four or more, or the number of air-in portions with a diameter of more than 5 mm was one or more.

((d) Flex Crack Growth Index)

In a tire durability driving test, it was evaluated whether the inner liner was broken or peeled off. The manufactured pneumatic tire of 195/65R15 size was mounted on a JIS standard rim 15×6JJ, and the inside of the tire was monitored under the conditions of a tire internal pressure of 150 KPa, which is lower than usual, a load of 600 kg, a speed of 100 km/hour, and a driving distance of 20,000 km, to measure the number of cracked/peeled portions. The obtained value was expressed as an index by the following equation, for flex crack growth in each example and each comparative example, using the value in Example 1 as a reference value (100). It shows that the greater the value, the more excellent the flex crack growth resistance.

$$(\text{flex crack growth index}) = (\text{the number of cracked/peeled portions in Example 1})/(\text{the number of cracked/peeled portions in each example and each comparative example})\times 100$$

((e) Rolling Resistance)

The manufactured pneumatic tire of 195/65R15 size was mounted on a JIS standard rim 15×6JJ, and rolling resistance was measured while driving the tire at room temperature (38°C) under the conditions of a load of 3.4 kN, an air pressure of 230 kPa, and a speed of 80 km/hour, using a rolling resistance tester manufactured by KOBE STEEL, LTD. The obtained value was expressed as an index by the following equation, for rolling resistance in each example and each comparative example, using the value in Example 1 as a reference value (100). It shows that the greater the value, the smaller the rolling resistance, which is preferable.

$$(\text{rolling resistance index}) = (\text{rolling resistance in Example 1})/(\text{rolling resistance in each example and each comparative example}) \times 100$$

((f) Steering Stability)

The pneumatic tire was mounted onto all wheels of a Japanese vehicle (FF 2000 cc), and the vehicle was driven around a test course to evaluate steering stability by a driver's sensory evaluation. On that occasion, relative evaluation was conducted on a scale of 10, with the value in Example 1 being set to 6. It shows that the greater the value, the more excellent the steering stability.

(Overall Judgment)

Criteria for overall judgment are as shown in Table 2.

[Table 2]

| Overall judgment | Judgment criteria | (a) Vulcanization adhesive strength of first layer | (b) Flaws in inner liner | (c) Presence or absence of air-in portions | (d) Flex crack growth index | (e) Rolling resistance index | (f) Steering stability |
|---|---|---|---|---|---|---|---|
| A | All of (a) to (f) satisfy conditions on the right. | 100 or more | A | A, B | 100 or more | 100 or more | 6 or more |
| B | Any one of (a) to (f) satisfies a corresponding condition on the right. If a plurality of judgments are made, a judgment with lower evaluation is adopted. | less than 100 | B | C | less than 100 | less than 100 | less than 6 |

(Evaluation Results)

Results are shown in Tables 3 to 6.

[Table 3]

| | | | Examples | | | | | | | | | | | | | |
|---|---|---|---|---|---|---|---|---|---|---|---|---|---|---|---|---|
| | | | 1* | 2 | 3 | 4 | 5 | 6 | 7 | 8 | 9 | 10 | 11 | 12 | 13 |
| Polymer Laminate Structure | First Layer | Manufacturing example | 4 | 4 | 4 | 4 | 4 | 4 | 4 | 5 | 4 | 4 | 4 | 4 | 4 |
| | | Thickness (mm) | 0.6 | 0.5 | 0.5 | 0.5 | 0.5 | 0.5 | 0.3 | 0.3 | 0.3 | 0.3 | 0.3 | 0.3 | 0.3 |
| | Second(a) Layer | Manufacturing example | - | 6 | 6 | - | 6 | 6 | 6 | 6 | 6 | 6 | 6 | 6 | 6 |
| | | Thickness (mm) | - | 0.1 | 0.1 | - | 0.05 | 0.1 | 0.05 | 0.05 | 0.05 | 0.05 | 0.05 | 0.05 | 0.05 |
| | Second(b) Layer | Manufacturing example | - | 7 | - | 7 | 7 | - | - | - | - | - | - | - | - |
| | | Thickness (mm) | - | 0.1 | - | 0.1 | 0.05 | - | - | - | - | - | - | - | - |
| Bladder Vent Line | Shape of groove cross section | | substantially rectangular | substantially rectangular | substantially rectangular | substantially rectangular | substantially rectangular | substantially rectangular | substantially rectangular | substantially rectangular | substantially rectangular | substantially rectangular | substantially rectangular | substantially rectangular | substantially rectangular |
| | Width of groove cross section (mm) | | 0.5 | 0.5 | 0.5 | 0.5 | 0.5 | 3.0 | 0.5 | 0.5 | 0.5 | 0.5 | 0.5 | 0.5 | 3.0 |
| | Depth of groove cross section (mm) | | 0.1 | 0.1 | 0.1 | 0.1 | 0.1 | 2.0 | 0.1 | 0.1 | 0.1 | 0.1 | 0.1 | 0.1 | 2.0 |
| | Groove cross sectional area ($mm^2$) | | 0.05 | 0.05 | 0.05 | 0.05 | 0.05 | 6.00 | 0.05 | 0.05 | 0.05 | 0.05 | 0.05 | 0.05 | 6.0 |
| | Angle $\alpha$ (°) | | 90 | 90 | 90 | 90 | 90 | 90 | 90 | 90 | 90 | 60 | 60 | 90 | 90 |
| | Angle $\beta$ or Angle ($\beta_1/\beta_2$) (°) | | 90 | 90 | 90 | 90 | 90 | 90 | 90 | 90 | 45 | 60 | 45 | 40/140 | 40/l40 |

EP 2 596 933 B1

(continued)

| | | Examples | | | | | | | | | | | | |
|---|---|---|---|---|---|---|---|---|---|---|---|---|---|---|
| | | 1* | 2 | 3 | 4 | 5 | 6 | 7 | 8 | 9 | 10 | 11 | 12 | 13 |
| Evalua-tion | Vulcanization ad-hesive strength of first layer | 100 | 140 | 110 | 140 | 140 | 110 | 110 | 110 | 110 | 110 | 110 | 110 | 110 |
| | Flaws in inner liner layer | A | A | A | A | A | A | A | A | A | A | A | A | A |
| | Presence or ab-sence of air-in por-tions | B | B | B | B | B | B | B | A | A | B | B | A | A |
| | Flex crack growth index | 100 | 105 | 120 | 120 | 120 | 135 | 155 | 160 | 130 | 130 | 130 | 135 | 125 |
| | Rolling resistance index | 100 | 100 | 105 | 105 | 105 | 104 | 107 | 107 | 105 | 105 | 105 | 105 | 103 |
| | Steering stability | 6.0 | 8.5 | 7.0 | 8.5 | 8.5 | 7.0 | 6.5 | 6.5 | 6.5 | 6.5 | 6.5 | 6.5 | 6.5 |
| Overall judgment | | A | A | A | A | A | A | A | A | A | A | A | A | A |
| * not according to the invention | | | | | | | | | | | | | | |

EP 2 596 933 B1

[Table 4]

| | | | Examples | | | | | | | | | | | |
|---|---|---|---|---|---|---|---|---|---|---|---|---|---|---|
| | | | 14 | 15 | 16 | 17 | 18 | 19 | 20 | 21 | 22 | 23 | 24 |
| Polymer Laminate Structure | First Layer | Manufacturing example | 4 | 4 | 4 | 4 | 4 | 4 | 4 | 4 | 4 | 4 | 4 |
| | | Thickness (mm) | 0.5 | 0.5 | 0.5 | 0.5 | 0.3 | 0.3 | 0.3 | 0.3 | 0.3 | 0.3 | 0.3 |
| | Second (a) Layer | Manufacturing example | 6 | - | 6 | 6 | 6 | 6 | 6 | 6 | 6 | 6 | 6 |
| | | Thickness (mm) | 0.1 | - | 0.05 | 0.1 | 0.05 | 0.05 | 0.05 | 0.05 | 0.05 | 0.05 | 0.05 |
| | Second (b) Layer | Manufacturing example | - | 7 | 7 | - | - | - | - | - | - | - | - |
| | | Thickness (mm) | - | 0.1 | 0.05 | - | - | - | - | - | - | - | - |
| Bladder Vent Line | | Shape of groove cross section | substantially semicircular | substantially semicircular | substantially semicircular | substantially semicircular | substantially semicircular | substantially semicircular | substantially semicircular | substantially semicircular | substantially semicircular | substantially semicircular | substantially semicircular |
| | | Width of groove cross section (mm) | 0.5 | 0.5 | 0.5 | 3.0 | 0.5 | 0.5 | 0.5 | 0.5 | 0.5 | 0.5 | 3.0 |
| | | Depth of groove cross section (mm) | 0.1 | 0.1 | 0.1 | 2.0 | 0.1 | 0.1 | 0.1 | 0.1 | 0.1 | 0.1 | 2.0 |
| | | Groove cross sectional area (mm$^2$) | 0.04 | 0.04 | 0.04 | 5.0 | 0.04 | 0.04 | 0.04 | 0.04 | 0.04 | 0.04 | 5.0 |
| | | Angle $\alpha$ (°) | 90 | 90 | 90 | 90 | 90 | 90 | 90 | 60 | 60 | 90 | 90 |
| | | Angle $\beta$ or Angle ($\beta_1$/$\beta_2$) (°) | 90 | 90 | 90 | 90 | 90 | 60 | 45 | 60 | 45 | 40/140 | 40/140 |

EP 2 596 933 B1

| | | Examples | | | | | | | | | | |
|---|---|---|---|---|---|---|---|---|---|---|---|---|
| | | 14 | 15 | 16 | 17 | 18 | 19 | 20 | 21 | 22 | 23 | 24 |
| Evalua-tion | Vulcanization adhe-sive strength of first layer | 110 | 140 | 140 | 110 | 110 | 110 | 110 | 110 | 110 | 110 | 110 |
| | Flaws in inner liner layer | A | A | A | A | A | A | A | A | A | A | A |
| | Presence or absence of air-in portions | B | B | B | B | B | A | A | B | B | A | A |
| | Flex crack growth index | 125 | 125 | 125 | 140 | 155 | 165 | 135 | 135 | 135 | 140 | 130 |
| | Rolling resistance index | 106 | 106 | 106 | 105 | 108 | 108 | 105 | 105 | 105 | 105 | 103 |
| | Steering stability | 7.0 | 8.5 | 8.5 | 7.0 | 6.5 | 6.5 | 6.5 | 6.5 | 6.5 | 6.5 | 6.5 |
| Overall judgment | | A | A | A | A | A | A | A | A | A | A | A |

EP 2 596 933 B1

[Table 5]

| | | | Examples | | | | | | | | | | | |
|---|---|---|---|---|---|---|---|---|---|---|---|---|---|---|
| | | | 25 | 26 | 27 | 28 | 29 | 30 | 31 | 32 | 33 | 34 | 35 |
| Polymer Laminate Structure | First Layer | Manufacturing example | 4 | 4 | 4 | 4 | 4 | 4 | 4 | 4 | 4 | 4 | 4 |
| | | Thickness (mm) | 0.5 | 0.5 | 0.5 | 0.5 | 0.3 | 0.3 | 0.3 | 0.3 | 0.3 | 0.3 | 0.3 |
| | Second Layer (a) | Manufacturing example | 6 | - | 6 | 6 | 6 | 6 | 6 | 6 | 6 | 6 | 6 |
| | | Thickness (mm) | 0.1 | - | 0.05 | 0.1 | 0.05 | 0.05 | 0.05 | 0.05 | 0.05 | 0.05 | 0.05 |
| | Second Layer (b) | Manufacturing example | - | 7 | 7 | - | - | - | - | - | - | - | - |
| | | Thickness (mm) | - | 0.1 | 0.05 | - | - | - | - | - | - | - | - |
| Bladder Vent Line | | Shape of groove cross section | substantially triangular | substantially triangular | substantially triangular | substantially triangular | substantially triangular | substantially triangular | substantially triangular | substantially triangular | substantially triangular | substantially triangular | substantially triangular |
| | | Width of groove cross section (mm) | 0.5 | 0.5 | 0.5 | 3.0 | 0.5 | 0.5 | 0.5 | 0.5 | 0.5 | 0.5 | 3.0 |
| | | Depth of groove cross section (mm) | 0.1 | 0.1 | 0.1 | 2.0 | 0.1 | 0.1 | 0.1 | 0.1 | 0.1 | 0.1 | 2.0 |
| | | Groove cross sectional area (mm²) | 0.025 | 0.025 | 0.025 | 3.0 | 0.025 | 0.025 | 0.025 | 0.025 | 0.025 | 0.025 | 3.0 |
| | | Angle $\alpha$ (°) | 90 | 90 | 90 | 90 | 90 | 90 | 90 | 60 | 60 | 90 | 90 |
| | | Angle $\beta$ or Angle ($\beta_1/\beta_2$) (°) | 90 | 90 | 90 | 90 | 90 | 60 | 45 | 60 | 45 | 40/140 | 40/140 |

| | | Examples | | | | | | | | | | |
|---|---|---|---|---|---|---|---|---|---|---|---|---|
| | | 25 | 26 | 27 | 28 | 29 | 30 | 31 | 32 | 33 | 34 | 35 |
| Evalua-tion | Vulcanization adhe-sive strength of first layer | 110 | 140 | 140 | 110 | 110 | 110 | 110 | 110 | 110 | 110 | 110 |
| | Flaws in inner liner layer | A | A | A | A | A | A | A | A | A | A | A |
| | Presence or absence of air-in portions | B | B | B | B | B | A | A | B | B | A | A |
| | Flex crack growth index | 120 | 120 | 120 | 135 | 155 | 160 | 130 | 130 | 130 | 135 | 125 |
| | Rolling resistance index | 106 | 106 | 106 | 105 | 108 | 108 | 105 | 105 | 105 | 105 | 103 |
| | Steering stability | 7.0 | 8.5 | 8.5 | 7.0 | 6.5 | 6.5 | 6.5 | 6.5 | 6.5 | 6.5 | 6.5 |
| Overall judgment | | A | A | A | A | A | A | A | A | A | A | A |

EP 2 596 933 B1

[Table 6]

| | | | Comparative Examples | | | | | | | | |
|---|---|---|---|---|---|---|---|---|---|---|---|
| | | | 1 | 2 | 3 | 4 | 5 | 6 | 7 | 8 | 9 |
| Polymer Laminate Structure | First Layer | Manufacturing example | 1 | 1 | 1 | 1 | 1 | 1 | 1 | 1 | 1 |
| | | Thickness (mm) | 0.6 | 0.5 | 0.5 | 0.5 | 0.5 | 0.5 | 0.5 | 0.5 | 0.5 |
| | Second (a) Layer | Manufacturing example | - | 2 | 2 | - | 2 | 2 | 2 | 2 | 2 |
| | | Thickness (mm) | - | 0.1 | 0.1 | - | 0.1 | 0.1 | 0.1 | 0.1 | 0.1 |
| | Second (b) Layer | Manufacturing example | - | - | - | 3 | - | - | - | - | - |
| | | Thickness (mm) | - | - | - | 0.1 | - | - | - | - | - |
| Bladder Vent Line | | Shape of groove cross section | substantially rectangular | substantially rectangular | substantially rectangular | substantially rectangular | substantially rectangular | substantially rectangular | substantially rectangular | substantially semicircular | substantially triangular |
| | | Width of groove cross section (mm) | 0.4 | 0.4 | 3.1 | 0.4 | 0.5 | 0.5 | 3.1 | 0.5 | 0.5 |
| | | Depth of groove cross section (mm) | 0.05 | 0.05 | 2.1 | 0.05 | 0.1 | 0.1 | 2.1 | 0.1 | 0.1 |
| | | Groove cross sectional area (mm$^2$) | 0.02 | 0.02 | 6.51 | 0.02 | 0.05 | 0.05 | 6.51 | 0.04 | 0.025 |
| | | Angle $\alpha$ (°) | 90 | 90 | 90 | 90 | 60 | 50 | 90 | 60 | 60 |
| | | Angle $\beta$ or Angle ($\beta_1/\beta_2$) (°) | 90 | 90 | 90 | 90 | 90 | 40 | 40/140 | 90 | 90 |

(continued)

| | | Comparative Examples | | | | | | | | |
|---|---|---|---|---|---|---|---|---|---|---|
| | | 1 | 2 | 3 | 4 | 5 | 6 | 7 | 8 | 9 |
| Evaluation | Vulcanization adhesive strength of first layer | 50 | 98 | 98 | 98 | 98 | 98 | 98 | 98 | 98 |
| | Flaws in inner liner layer | B | B | B | B | B | B | B | B | B |
| | Presence or absence of air-in portions | C | C | B | C | C | C | B | C | C |
| | Flex crack growth index | 93 | 100 | 95 | 100 | 95 | 96 | 95 | 96 | 97 |
| | Rolling resistance index | 93 | 100 | 95 | 100 | 97 | 96 | 95 | 98 | 98 |
| | Steering stability | 5.5 | 5.5 | 5.5 | 5.5 | 5.5 | 5.5 | 5.5 | 5.5 | 5.5 |
| Overall judgment | | B | B | B | B | B | B | B | B | B |

(Comparison between Examples 1 to 8 and Comparative Examples 1 to 4)

In the pneumatic tires manufactured in Examples 1 to 8, the first and second vent lines had a shape of a groove cross section having a width of more than or equal to 0.5 mm and less than or equal to 3.0 mm in a mold-side surface of the bladder and a depth of more than or equal to 0.1 mm and less than or equal to 2.0 mm from the mold-side surface of the bladder, and the first and second vent lines had a groove cross sectional area of more than or equal to 0.025 mm$^2$ and less than or equal to 6.0 mm$^2$.

In contrast, in the pneumatic tires manufactured in Comparative Examples 1, 2, and 4, the first and second vent lines had a shape of a groove cross section having a width of less than 0.5 mm in the mold-side surface of the bladder and a depth of less than 0.1 mm from the mold-side surface of the bladder, and the first and second vent lines had a groove cross sectional area of less than 0.025 mm$^2$. Further, in the pneumatic tire manufactured in Comparative Example 3, the first and second vent lines had a shape of a groove cross section having a width of more than 3.0 mm in the mold-side surface of the bladder and a depth of more than 2.0 mm from the mold-side surface of the bladder, and the first and second vent lines had a groove cross sectional area of more than 6.0 mm$^2$.

Thus, the pneumatic tires manufactured in Examples 1 to 8 exhibited excellent performance in the air-in phenomenon, flex crack adjustment, rolling resistance, and steering stability, when compared with those in Comparative Examples 1 to 4.

(Comparison between Examples 1 to 8 and Comparative Example 5)

In the pneumatic tires manufactured in Examples 1 to 8, angle $\alpha$ of the first vent line with respect to a tangent to a part corresponding to a tire bead toe part and angle $\beta$ of the second vent line with respect to the tangent to the part corresponding to the tire bead toe part satisfied $\alpha > \beta$, whereas in the pneumatic tire manufactured in Comparative Example 5, $\alpha \geq \beta$ was not satisfied.

Thus, the pneumatic tires manufactured in Examples 1 to 8 exhibited excellent performance in the air-in phenomenon, flex crack adjustment, rolling resistance, and steering stability, when compared with that in Comparative Example 5.

(Comparison between Examples 1 to 8 and Comparative Example 6)

In the pneumatic tires manufactured in Examples 1 to 8, angle $\alpha$ of the first vent line with respect to the tangent to the part corresponding to the tire bead toe part was more than or equal to 60° and less than or equal to 90°, whereas in the pneumatic tire manufactured in Comparative Example 6, angle $\alpha$ of the first vent line with respect to the tangent to the part corresponding to the tire bead toe part was less than 60°.

Thus, the pneumatic tires manufactured in Examples 1 to 8 exhibited excellent performance in the air-in phenomenon, flex crack adjustment, rolling resistance, and steering stability, when compared with that in Comparative Example 6.

(Comparison between Examples 12 to 13 and Comparative Example 7)

In the pneumatic tires manufactured in Examples 12 to 13, the first and second vent lines had a shape of a groove cross section having a width of more than or equal to 0.5 mm and less than or equal to 3.0 mm in the mold-side surface of the bladder and a depth of more than or equal to 0.1 mm and less than or equal to 2.0 mm from the mold-side surface of the bladder, and the first and second vent lines had a groove cross sectional area of more than or equal to 0.025 mm$^2$ and less than or equal to 6.0 mm$^2$,

In contrast, in the pneumatic tire manufactured in Comparative Example 7, the first and second vent lines had a shape of a groove cross section having a width of more than 3.0 mm in the mold-side surface of the bladder and a depth of more than 2.0 mm from the mold-side surface of the bladder, and the first and second vent lines had a groove cross sectional area of more than 6.0 mm$^2$.

Thus, the pneumatic tires manufactured in Examples 12 to 13 exhibited excellent performance in the air-in phenomenon, flex crack adjustment, rolling resistance, and steering stability, when compared with that in Comparative Example 7.

(Comparison between Examples 14 to 24 and Comparative Example 8)

In the pneumatic tires manufactured in Examples 14 to 24, angle $\alpha$ of the first vent line with respect to the tangent to the part corresponding to the tire bead toe part and angle $\beta$ of the second vent line with respect to the tangent to the part corresponding to the tire bead toe part satisfied $\alpha > \beta$, whereas in the pneumatic tire manufactured in Com-

parative Example 8, $\alpha \geq \beta$ was not satisfied.

Thus, the pneumatic tires manufactured in Examples 14 to 24 exhibited excellent performance in the air-in phenomenon, flex crack adjustment, rolling resistance, and steering stability, when compared with that in Comparative Example 8.

(Comparison between Examples 25 to 35 and Comparative Example 9)

In the pneumatic tires manufactured in Examples 25 to 35, angle $\alpha$ of the first vent line with respect to the tangent to the part corresponding to the tire bead toe part and angle $\beta$ of the second vent line with respect to the tangent to the part corresponding to the tire bead toe part satisfied $\alpha > \beta$, whereas in the pneumatic tire manufactured in Comparative Example 9, $\alpha \geq \beta$ was not satisfied.

Thus, the pneumatic tires manufactured in Examples 25 to 35 exhibited excellent performance in the air-in phenomenon, flex crack adjustment, rolling resistance, and steering stability, when compared with that in Comparative Example 9.

<Examples 36 to 70, Comparative Examples 10 to 17>

<Manufacturing of Polymer Laminate for Inner Liner>

The respective ingredients in accordance with formulations shown in Table 7 were charged into a twin-screw extruder (screw diameter: $\phi$ 50 mm; L/D: 30; cylinder temperature: 200°C), and kneaded at 200 rpm to obtain pellets (Manufacturing Examples 9 to 15). The obtained pellets were charged into a co-extruder (cylinder temperature: 200°C) to manufacture polymer laminates having structures shown in Tables 9 to 11.

[Table 7]

| | | | Manufacturing examples | | | | | | | |
|---|---|---|---|---|---|---|---|---|---|---|
| | | | 8 | 9 | 10 | 11 | 12 | 13 | 14 | 15 |
| Formulation (parts by mass) | IIR | (*1) | 60 | - | 95 | - | - | - | - | - |
| | NR | (*2) | - | 60 | - | 95 | - | - | - | - |
| | SIBS | (*3) | 40 | 40 | 5 | 5 | - | - | - | - |
| | SIS | (*4) | - | - | - | - | 100 | 100 | - | - |
| | SIB | (*5) | - | - | - | - | - | - | 100 | 100 |
| | Stearic acid | (*6) | 3 | 3 | 3 | 3 | - | 3 | - | 3 |
| | Zinc oxide | (*7) | 5 | 5 | 5 | 5 | - | 5 | - | 5 |
| | Antioxidant | (*8) | 1 | 1 | 1 | 1 | - | 1 | - | 1 |
| | Vulcanization accelerator | (*9) | 1 | 1 | 1 | 1 | - | 1 | - | 1 |
| | Sulfur | (*10) | 0.5 | 0.5 | 0.5 | 0.5 | - | 0.5 | - | 0.5 |

(*1) IIR: "Exxon chlorobutyl 1066" manufactured by Exxon Mobil Corporation

(*2) NR: natural rubber TSR20

(*3) SIBS: "SIBSTAR 102T" manufactured by Kaneka Corporation (a styrene-isobutylene-styrene triblock copolymer, weight-average molecular weight of 100,000, styrene unit content of 25% by mass, Shore A hardness of 25)

(*4) SIS: "D1161JP" manufactured by Kraton Performance Polymers Inc. (a styrene-isoprene-styrene triblock copolymer, weight-average molecular weight of 150,000, styrene unit content of 15% by mass)

(*5) SIB: In a 2L reaction vessel equipped with a stirrer, 589 mL of methylcyclohexane (dried over molecular sieves), 613 mL of n-butyl chloride (dried over molecular sieves), and 0.550 g of cumyl chloride were charged. After cooling the reaction vessel to −70°C, 0.35 mL of α-picoline (2-methylpyridine) and 179 mL of isobutylene were added. Further, 9.4 mL of titanium tetrachloride was added to start polymerization, and then the solution was reacted for 2.0 hours while being stirred at −70°C. Next, 59 mL of styrene was added into the reaction vessel and the reaction was continued for 60 minutes, and then the reaction was terminated by adding a large

amount of methanol. After removing the solvent and the like from the reaction solution, a polymer was dissolved in toluene and washed twice with water. This toluene solution was added to the methanol mixture, thereby precipitating the polymer, and the resultant polymer was dried at 60°C for 24 hours to obtain a styrene-isobutylene diblock copolymer (weight-average molecular weight of 70,000, styrene unit content of 15% by mass)

(*6) Stearic acid: "Stearic Acid Lunac S30" manufactured by Kao Corporation

(*7) Zinc oxide : "Zinc White No.1" manufactured by Mitsui Mining & Smelting Co., Ltd.

(*8) Antioxidant: "Noclac 6C" (N-(1,3-dimethylbutyl)-N'-phenyl-p-phenylenediamine) manufactured by Ouchi Shinko Chemical Industrial Co., Ltd.

(*9) Vulcanization accelerator: "Nocceler DM" (di-2-benzothiazolyldisulfide) manufactured by Ouchi Shinko Chemical Industrial Co., Ltd.

(*10) Sulfur: "Sulfur Powder" manufactured by Tsurumi Chemical Industry Co., Ltd.

<Manufacturing of Pneumatic Tire>

Each obtained polymer laminate was used for the inner liner part of a tire to prepare a green tire. It is noted that the polymer laminate was arranged so that the first layer was located at the radial innermost side of the green tire and the second layer contacted a carcass layer of the green tire. The green tire was subjected to press molding in a mold at 170°C for 20 minutes, using a tire vulcanizing bladder having bladder vent lines in the shape shown in Tables 9 to 11, to manufacture a vulcanized tire of 195/65R15 size. After the vulcanized tire was cooled at 100°C for 3 minutes, the vulcanized tire was removed from the mold to obtain a pneumatic tire.

Using the obtained pneumatic tire, the following evaluations were performed.

((a) Flaws in Inner Liner Layer)

Flaws in the inner liner layer on the inside of the vulcanized tire were visually examined, and judged on the following criteria. It is noted that the sizes of the flaws are not taken into consideration.

A: In appearance, per tire, the number of flaws in the inner liner was 0.
B: In appearance, per tire, the number of flaws in the inner liner was one or more.

((b) Presence or Absence of Air-in Portions)

The inside of the tire after the vulcanization and cooling steps was examined, and evaluated on the following criteria.

A: In appearance, per tire, the number of air-in portions with a diameter of 5 mm or less and the number of air-in portions with a diameter of more than 5 mm were both 0.
B: In appearance, per tire, the number of air-in portions with a diameter of 5 mm or less was one to three, and the number of air-in portions with a diameter of more than 5 mm was 0.
C: In appearance, per tire, the number of air-in portions with a diameter of 5 mm or less was four or more, or the number of air-in portions with a diameter of more than 5 mm was one or more.

((c) Flex Crack Growth)

In a tire durability driving test, it was evaluated whether the inner liner was broken or peeled off. The manufactured pneumatic tire of 195/65R15 size was mounted on a JIS standard rim 15×6JJ, and the inside of the tire was monitored under the conditions of a tire internal pressure of 150 KPa, which is lower than usual, a load of 600 kg, a speed of 100 km/hour, and a driving distance of 20,000 km, to measure the number of cracked/peeled portions. The obtained value was expressed as an index by the following equation, for flex crack growth in each example and each comparative example, using the value in Example 69 as a reference value (100). It shows that the greater the value, the more excellent the flex crack growth resistance.

$$(\text{flex crack growth index}) = (\text{the number of cracked/peeled portions in Example 69})/(\text{the number of cracked/peeled portions in each example and each comparative example})\times 100$$

((d) Rolling Resistance)

The manufactured pneumatic tire of 195/65R15 size was mounted on a JIS standard rim 15×6JJ, and rolling resistance was measured while driving the tire at room temperature (38°C) under the conditions of a load of 3.4 kN, an air pressure of 230 kPa, and a speed of 80 km/hour, using a rolling resistance tester manufactured by KOBE STEEL, LTD. The obtained value was expressed as an index by the following equation, for rolling resistance in each example and each comparative example, using the value in Example 69 as a reference value (100). It shows that the greater the value, the smaller the rolling resistance, which is preferable.

$$(\text{rolling resistance index}) = (\text{rolling resistance in Example 69})/(\text{rolling resistance in each example and each comparative example})\times 100$$

Results are shown in Tables 9 to 11.

(Overall Judgment)

Criteria for overall judgment are as shown in Table 8.

[Table 8]

| Overall judgment | Judgment criteria | (a) Flaws in inner liner layer | (b) Presence or absence of air-in portions | (c) Flex crack growth index | (d) Rolling resistance index |
|---|---|---|---|---|---|
| A | All of (a) to (d) satisfy conditions on the right. | A | A or B | 100 or more | 100 or more |
| B | Any one of (a) to (d) satisfies a corresponding condition on the right. | B | C | less than 100 | less than 100 |

[Table 9]

| | | | Examples | | | | | | | | | | | | | | |
|---|---|---|---|---|---|---|---|---|---|---|---|---|---|---|---|---|---|
| | | | 36 | 37 | 38 | 39 | 40 | 41 | 42 | 43 | 44 | 45 | 46 | 47 | 48 | 49 | 50 | 51 |
| Polymer Laminate Structure | First Layer | Manufacturing example | 9 | 9 | 9 | 9 | 9 | 8 | 9 | 9 | 9 | 9 | 9 | 9 | 9 | 9 | 9 | 9 |
| | | Thickness (mm) | 0.5 | 0.5 | 0.5 | 0.5 | 0.3 | 0.3 | 0.3 | 0.3 | 0.3 | 0.3 | 0.3 | 0.5 | 0.5 | 0.5 | 0.5 | 0.3 |
| | Second (a) Layer | Manufacturing example | 13 | - | 13 | 13 | 13 | 13 | 13 | 13 | 13 | 13 | 13 | 13 | - | 13 | 13 | 13 |
| | | Thickness (mm) | 0.1 | - | 0.05 | 0.1 | 0.05 | 0.05 | 0.05 | 0.05 | 0.05 | 0.05 | 0.05 | 0.1 | - | 0.05 | 0.1 | 0.05 |
| | Second (b) Layer | Manufacturing example | - | 15 | 15 | - | - | - | - | - | - | - | - | - | 15 | 15 | - | - |
| | | Thickness (mm) | - | 0.1 | 0.05 | - | - | - | - | - | - | - | - | - | 0.1 | 0.05 | - | - |

(continued)

| | | Examples | | | | | | | | | | | | | | |
|---|---|---|---|---|---|---|---|---|---|---|---|---|---|---|---|---|
| | | 36 | 37 | 38 | 39 | 40 | 41 | 42 | 43 | 44 | 45 | 46 | 47 | 48 | 49 | 50 | 51 |
| Blad-der Vent Line | Shape of groove cross section | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly rec-tangular | sub-stantial-ly semi-circular | sub-stantial-ly semi-circular | sub-stantial-ly semi-circular | sub-stantial-ly semi-circular | sub-stantial-ly semi-circular |
| | Width of groove cross section (mm) | 0.5 | 0.5 | 0.5 | 3.0 | 0.5 | 0.5 | 0.5 | 0.5 | 0.5 | 0.5 | 3.0 | 0.5 | 0.5 | 0.5 | 3.0 | 0.5 |
| | Depth of groove cross section (mm) | 0.1 | 0.1 | 0.1 | 2.0 | 0.1 | 0.1 | 0.1 | 0.1 | 0.1 | 0.1 | 2.0 | 0.1 | 0.1 | 0.1 | 2.0 | 0.1 |
| | Groove cross sectional area (mm$^2$) | 0.05 | 0.05 | 0.05 | 6.00 | 0.05 | 0.05 | 0.05 | 0.05 | 0.05 | 0.05 | 6.00 | 0.04 | 0.04 | 0.04 | 5.00 | 0.04 |
| | Angle $\alpha$ (°) | 90 | 90 | 90 | 90 | 90 | 90 | 90 | 60 | 60 | 90 | 90 | 90 | 90 | 90 | 90 | 90 |
| | Angle $\beta$ or Angle ($\beta_1/\beta_2$) (°) | 90 | 90 | 90 | 90 | 90 | 90 | 45 | 60 | 45 | 40/140 | 40/140 | 90 | 90 | 90 | 90 | 90 |
| Evaluation | Flaws in inner liner layer | A | A | A | A | A | A | A | A | A | A | A | A | A | A | A | A |
| | Presence or absence of air-in portions | B | B | B | B | B | A | A | B | B | A | A | B | B | B | B | B |
| | Flex crack growth index | 120 | 120 | 120 | 135 | 155 | 160 | 130 | 130 | 130 | 135 | 125 | 125 | 125 | 125 | 140 | 155 |
| | Rolling resistance index | 105 | 105 | 105 | 104 | 107 | 107 | 105 | 105 | 105 | 105 | 103 | 106 | 106 | 106 | 105 | 108 |
| Overall judgment | | A | A | A | A | A | A | A | A | A | A | A | A | A | A | A | A |

[Table 10]

| | | | Examples | | | | | | | | | | | | | | |
|---|---|---|---|---|---|---|---|---|---|---|---|---|---|---|---|---|---|
| | | | 52 | 53 | 54 | 55 | 56 | 57 | 58 | 59 | 60 | 61 | 62 | 63 | 64 | 65 | 66 | 67 |
| Polymer Laminate Structure | First Layer | Manufacturing example | 9 | 9 | 9 | 9 | 9 | 9 | 9 | 9 | 9 | 9 | 9 | 9 | 9 | 9 | 9 | 9 |
| | | Thickness (mm) | 0.3 | 0.3 | 0.3 | 0.3 | 0.3 | 0.3 | 0.5 | 0.5 | 0.5 | 0.5 | 0.3 | 0.3 | 0.3 | 0.3 | 0.3 | 0.3 |
| | Second (a) Layer | Manufacturing example | 13 | 13 | 13 | 13 | 13 | 13 | 13 | - | 13 | 13 | 13 | 13 | 13 | 13 | 13 | 13 |
| | | Thickness (mm) | 0.05 | 0.05 | 0.05 | 0.05 | 0.05 | 0.05 | 0.1 | - | 0.05 | 0.1 | 0.05 | 0.05 | 0.05 | 0.05 | 0.05 | 0.05 |
| | Second (b) Layer | Manufacturing example | - | - | - | - | - | - | - | 15 | 15 | - | - | - | - | - | - | - |
| | | Thickness (mm) | - | - | - | - | - | - | - | 0.1 | 0.05 | - | - | - | - | - | - | - |

(continued)

| | | Examples | | | | | | | | | | | | | | | |
|---|---|---|---|---|---|---|---|---|---|---|---|---|---|---|---|---|---|
| | | 52 | 53 | 54 | 55 | 56 | 57 | 58 | 59 | 60 | 61 | 62 | 63 | 64 | 65 | 66 | 67 |
| Bladder Vent Line | Shape of groove cross section | sub-stantially semi-circular | sub-stantially semi-circular | sub-stantially semi-circular | sub-stantially semi-circular | sub-stantially semi-circular | sub-stantially semi-circular | sub-stantially triangular | sub-stantially triangular | sub-stantially triangular | sub-stantially triangular | sub-stantially triangular | sub-stantially triangular | sub-stantially triangular | sub-stantially triangular | sub-stantially triangular | sub-stantially triangular |
| | Width of groove cross section (mm) | 0.5 | 0.5 | 0.5 | 0.5 | 0.5 | 3.0 | 0.5 | 0.5 | 0.5 | 3.0 | 0.5 | 0.5 | 0.5 | 0.5 | 0.5 | 0.5 |
| | Depth of groove cross section (mm) | 0.1 | 0.1 | 0.1 | 0.1 | 0.1 | 2.0 | 0.1 | 0.1 | 0.1 | 2.0 | 0.1 | 0.1 | 0.1 | 0.1 | 0.1 | 0.1 |
| | Groove cross sectional area (mm$^2$) | 0.04 | 0.04 | 0.04 | 0.04 | 0.04 | 5.00 | 0.025 | 0.025 | 0.025 | 3.00 | 0.025 | 0.025 | 0.025 | 0.025 | 0.025 | 0.025 |
| | Angle $\alpha$ (°) | 90 | 90 | 60 | 60 | 90 | 90 | 90 | 90 | 90 | 90 | 90 | 90 | 90 | 60 | 60 | 90 |
| | Angle $\beta$ or Angle ($\beta_1/\beta_2$) (°) | 60 | 45 | 60 | 45 | 40/140 | 40/140 | 90 | 90 | 90 | 90 | 90 | 60 | 45 | 60 | 45 | 40/140 |
| Evaluation | Flaws in inner liner layer | A | A | A | A | A | A | A | A | A | A | A | A | A | A | A | A |
| | Presence or absence of air-in portions | A | A | B | B | A | A | B | B | B | B | B | A | A | B | B | A |
| | Flex crack growth index | 165 | 135 | 135 | 135 | 140 | 130 | 120 | 120 | 120 | 135 | 155 | 160 | 130 | 130 | 130 | 135 |
| | Rolling resistance index | 108 | 105 | 105 | 105 | 105 | 103 | 106 | 106 | 106 | 105 | 108 | 108 | 105 | 105 | 105 | 105 |
| | Overall judgment | A | A | A | A | A | A | A | A | A | A | A | A | A | A | A | A |

[Table 11]

| | | | Examples | | | Comparative Examples | | | | | | | | |
|---|---|---|---|---|---|---|---|---|---|---|---|---|---|---|
| | | | 68 | 69 | 70 | 10 | 11 | 12 | 13 | 14 | 15 | 16 | 17 |
| Polymer Laminate Structure | First Layer | Manufacturing example | 9 | 9 | 9 | 9 | 9 | 9 | 9 | 9 | 9 | 9 | 9 |
| | | Thickness (mm) | 0.3 | 0.6 | 0.5 | 0.5 | 0.5 | 0.5 | 0.5 | 0.5 | 0.5 | 0.5 | 0.5 |
| | Second (a) Layer | Manufacturing example | 13 | - | 13 | 13 | 13 | - | 13 | 13 | 13 | 13 | 13 |
| | | Thickness (mm) | 0.05 | - | 0.1 | 0.1 | 0.1 | - | 0.1 | 0.1 | 0.1 | 0.1 | 0.1 |
| | Second (b) Layer | Manufacturing example | - | - | 15 | - | - | 15 | - | - | - | - | - |
| | | Thickness (mm) | - | - | 0.1 | - | - | 0.1 | - | - | - | - | - |
| Bladder Vent Line | | Shape of groove cross section | substantially triangular | substantially rectangular | substantially rectangular | substantially rectangular | substantially rectangular | substantially rectangular | substantially rectangular | substantially rectangular | substantially rectangular | substantially semicircular | substantially triangular |
| | | Width of groove cross section (mm) | 3.0 | 0.50 | 0.50 | 0.40 | 3.10 | 0.40 | 0.50 | 0.50 | 3.10 | 0.50 | 0.50 |
| | | Depth of groove cross section (mm) | 2.0 | 0.10 | 0.10 | 0.05 | 2.10 | 0.05 | 0.10 | 0.10 | 2.10 | 0.10 | 0.10 |
| | | Groove cross sectional area (mm$^2$) | 3.00 | 0.05 | 0.05 | 0.02 | 6.51 | 0.02 | 0.05 | 0.05 | 6.51 | 0.04 | 0.025 |
| | | Angle $\alpha$ (°) | 90 | 90 | 90 | 90 | 90 | 90 | 60 | 50 | 90 | 60 | 60 |
| | | Angle $\beta$ or Angle ($\beta_1$/$\beta_2$) (°) | 40/140 | 90 | 90 | 90 | 90 | 90 | 90 | 40 | 40/140 | 90 | 90 |

(continued)

| | | Examples | | | Comparative Examples | | | | | | | |
|---|---|---|---|---|---|---|---|---|---|---|---|---|
| | | 68 | 69 | 70 | 10 | 11 | 12 | 13 | 14 | 15 | 16 | 17 |
| Evalua-tion | Flaws in inner liner layer | A | A | A | B | B | B | B | B | B | B | B |
| | Presence or absence of air-in portions | A | B | B | C | B | C | C | C | B | C | C |
| | Flex crack growth index | 125 | 100 | 105 | 100 | 95 | 100 | 95 | 96 | 95 | 96 | 97 |
| | Rolling resistance index | 103 | 100 | 100 | 100 | 95 | 100 | 97 | 96 | 95 | 98 | 98 |
| Overall judgment | | A | A | A | B | B | B | B | B | B | B | B |

Examples 36 to 68 are tires manufactured using tire vulcanizing bladders in accordance with the present invention. The tires had no flaws in the inner liner layer, and was able to satisfactorily suppress occurrence of the air-in phenomenon. Further, the tires had an excellent flex crack growth resistance and a reduced rolling resistance.

Example 69 is a tire manufactured using a tire vulcanizing bladder in accordance with the present invention, having an inner liner including only a 0.6 mm-thick first layer. Although the tire had no flaws in the inner liner layer, an air-in phenomenon occurred therein.

Example 70 is a tire manufactured using a tire vulcanizing bladder in accordance with the present invention, having an inner liner including a 0.5 mm-thick first layer, a 0.1 mm-thick second (a) layer, and a 0.1 mm-thick second (b) layer. Although the tire had no flaws in the inner liner layer, an air-in phenomenon occurred therein. The tire had a good flex crack growth resistance, and had the same rolling resistance as that in Example 69.

Comparative Examples 9 to 15 are tires manufactured using tire vulcanizing bladders having vent lines with shapes which are outside of the scope of the present invention. The tires had flaws in the inner liner layer.

It should be understood that the embodiments and examples disclosed herein are illustrative and non-restrictive in every respect. The scope of the present invention is defined by the scope of the claims, rather than the description above, and is intended to include any modifications within the scope of the claims.

REFERENCE SIGNS LIST

1: tire vulcanizing bladder; 2a, 2b: flange part; 4: vent line; 4a: first vent line; 4b: second vent line; 10a: polymer sheet; 10b, 10c, 10d, 10e: polymer laminate; 11a, 11b, 11c, 11d, 11e: SIBS layer; 12b, 12d, 12e: SIS layer; 13c, 13d, 13e: SIB layer; 20, 30, 40: polymer sheet; 21, 31, 41: first layer; 32, 42: second layer; 42a: second (a) layer; 42b: second (b) layer; 101: pneumatic tire; 102: crown part; 103: sidewall part; 104: bead part; 104a: bead toe part; 105: bead core; 106: carcass; 107: belt layer; 108: bead apex; 109: inner liner; 110: buttress part.

**Claims**

1. A method for manufacturing a pneumatic tire (101) using a tire vulcanizing bladder including a plurality of vent lines (4), wherein said pneumatic tire (101) includes an inner liner (109) on an inner surface thereof,

   said inner liner (109) has an SIBS layer (11a) containing a styrene-isobutylene-styrene triblock copolymer,

   said inner liner (109) has at least one of an SIS layer (12b) containing a styrene-isoprene-styrene triblock copolymer and an SIB layer (13) containing a styrene-isobutylene diblock copolymer, in addition to said SIBS layer (11a),

   said SIBS layer (11a) has a thickness of more than or equal to 0.05 mm and less than or equal to 0.6 mm,

   said SIS layer (12b) and said SIB layer (13) have a total thickness of more than or equal to 0.01 mm and less than or equal to 0.3 mm, and

   at least one of said SIBS layer (11a), said SIS layer (12b), and said SIB layer (13) contains more than or equal to 0.5% by mass and less than or equal to 40% by mass of a polymer obtained by polymerization of a monomer unit having 4 carbon atoms,

   said vent lines (4) each include a first vent line (4a) at a part (109a) corresponding to from a tire bead toe part (104a) to a tire buttress part (110), and a second vent line (4b) at a part (109b) corresponding to from said tire buttress part (110) to a tire crown part (102),

   said first vent line (4a) and said second vent line (4b) have a shape of a groove cross section having a width W of more than or equal to 0.5 mm and less than or equal to 3.0 mm in a mold-side surface of the tire vulcanizing bladder, and a depth of more than or equal to 0.1 mm and less than or equal to 2.0 mm from the mold-side surface of the tire vulcanizing bladder,

   said first vent line (4a) and said second vent line (4b) have a groove cross sectional area of more than or equal to 0.025 mm$^2$ and less than or equal to 6.0 mm$^2$,

   said first vent line (4a) has an angle $\alpha$ of more than or equal to 60° and less than or equal to 90° with respect to a tangent (T) to a part corresponding to said tire bead toe part (104a), and said second vent line (4b) has an angle $\beta$ of more than or equal to 40° and less than or equal to 90° with respect to the tangent (T) to the part corresponding to said tire bead toe part (104a), and

   said angle $\alpha$ and said angle $\beta$ have magnitudes satisfying $\alpha > \beta$.

2. The method for manufacturing a pneumatic tire (101) according to claim 1, wherein said SIBS layer (11a) contains more than or equal to 0.5% by mass and less than or equal to 40% by mass of a polymer obtained by polymerization of a monomer unit having 4 carbon atoms.

3. The method for manufacturing a pneumatic tire (101) according to claim 1, wherein the shape of the groove cross section of said first vent line (4a) and said second vent line (4b) is substantially rectangular, substantially semicircular, or substantially triangular.

4. The method for manufacturing a pneumatic tire (101) according to claim 1, wherein said polymer obtained by polymerization of a monomer unit having 4 carbon atoms is composed of at least one of polybutene and polyisobutylene.

5. The method for manufacturing a pneumatic tire (101) according to claim 1, wherein said polymer obtained by polymerization of a monomer unit having 4 carbon atoms satisfies at least one of a number-average molecular weight of more than or equal to 300 and less than or equal to 3,000, a weight-average molecular weight of more than or equal to 700 and less than or equal to 100,000, and a viscosity-average molecular weight of more than or equal to 20,000 and less than or equal to 70,000.

6. The method for manufacturing a pneumatic tire (101) according to claim 1, wherein said SIBS layer (11a) is arranged at a radial innermost side of the pneumatic tire (101).

7. The method for manufacturing a pneumatic tire (101) according to claim 1, wherein the SIS layer (12b) containing said polymer obtained by polymerization of a monomer unit having 4 carbon atoms or the SIB layer (13) containing said polymer obtained by polymerization of a monomer unit having 4 carbon atoms is arranged in contact with a carcass layer (106) of the pneumatic tire (101).

8. The method for manufacturing a pneumatic tire (101) according to claim 1, wherein said styrene-isobutylene-styrene triblock copolymer has a weight-average molecular weight of more than or equal to 50,000 and less than or equal to 400,000 and a styrene unit content of more than or equal to 10% by mass and less than or equal to 30% by mass.

9. The method for manufacturing a pneumatic tire (101) according to claim 1, wherein said styrene-isoprene-styrene triblock copolymer has a weight-average molecular weight of more than or equal to 100,000 and less than or equal to 290,000 and a styrene unit content of more than or equal to 10% by mass and less than or equal to 30% by mass.

10. The method for manufacturing a pneumatic tire (101) according to claim 1, wherein said styrene-isobutylene diblock copolymer is linear and has a weight-average molecular weight of more than or equal to 40,000 and less than or equal to 120,000 and a styrene unit content of more than or equal to 10% by mass and less than or equal to 35% by mass.

11. A pneumatic tire (101) manufactured using a method for manufacturing a pneumatic tire (101) according to claim 1, wherein said pneumatic tire (101) includes an inner liner (109) including a plurality of vent lines (4) on an inner surface thereof,
said inner liner (109) has an SIBS layer (11a) containing a styrene-isobutylene-styrene triblock copolymer, and
said SIBS layer (11a) has a thickness of more than or equal to 0.05 mm and less than or equal to 0.6 mm.

12. The pneumatic tire (101) according to claim 11, wherein said SIBS layer (11a) contains more than or equal to 0.5% by mass and less than or equal to 40% by mass of a polymer obtained by polymerization of a monomer unit having 4 carbon atoms.

13. A tire vulcanizing bladder for manufacturing a pneumatic tire including an inner liner (109) containing a styrene-isobutylene-styrene triblock copolymer,
wherein said tire vulcanizing bladder includes a plurality of vent lines (4),
said vent lines (4) each include a first vent line (4a) at a part corresponding to from a tire bead toe part (104a) to a tire buttress part (110), and a second vent line (4b) at a part corresponding to from said tire buttress part (110) to a tire crown part (102),
said first vent line (4a) and said second vent line (4b) have a shape of a groove cross section having a width W of more than or equal to 0.5 mm and less than or equal to 3.0 mm in a mold-side surface of the tire vulcanizing bladder, and a depth of more than or equal to 0.1 mm and less than or equal to 2.0 mm from the mold-side surface of the tire vulcanizing bladder,
said first vent line (4a) and said second vent line (4b) have a groove cross sectional area of more than or equal to 0.025 mm$^2$ and less than or equal to 6.0 mm$^2$,
said first vent line (4a) has an angle $\alpha$ of more than or equal to 60° and less than or equal to 90° with respect to a tangent (T) to a part corresponding to said tire bead toe part (104a), and said second vent line (4b) has an angle $\beta$

of more than or equal to 40° and less than or equal to 90° with respect to the tangent (T) to the part corresponding to said tire bead toe part (104a), and
said angle α and said angle β have magnitudes satisfying α>β.

14. The tire vulcanizing bladder according to claim 13, wherein the shape of the groove cross section of said vent lines (4) is substantially rectangular, substantially semicircular, or substantially triangular.


**Patentansprüche**

1. Verfahren zum Herstellen eines Luftreifens (101) unter Verwendung eines Reifenvulkanisations-Heizbalges, der eine Mehrzahl von Entlüftungsleitungen (4) umfasst,

   wobei der Luftreifen (101) einen Innerliner (109) an seiner Innenfläche umfasst,
   der Innerliner (109) eine SIBS-Schicht (11a) aufweist, die ein Styrol-Isobutylen-Styrol-Triblockcopolymer enthält,
   der Innerliner (109) zumindest eine von einer SIS-Schicht (12b), die ein Styrol-Isopren-Styrol-Triblockcopolymer enthält, und einer SIB-Schicht (13), die ein Styrol-Isobutylen-Diblockcopolymer enthält, zusätzlich zu der SIBS-Schicht (11a) aufweist,
   wobei die SIBS-Schicht (11a) eine Dicke von mehr als oder gleich 0,05 mm und weniger als oder gleich 0,6 mm aufweist,
   die SIS-Schicht (12b) und die SIB-Schicht (13) eine Gesamtdicke von mehr als oder gleich 0,01 mm und weniger als oder gleich 0,3 mm aufweisen, und
   zumindest eine von der SIBS-Schicht (11a), der SIS-Schicht (12b) und der SIB-Schicht (13) mehr als oder gleich 0,5 Masse-% und weniger als oder gleich 40 Masse-% eines Polymers enthält, das durch Polymerisation einer Monomereinheit mit 4 Kohlenstoffatomen erhalten worden ist,
   die Entlüftungsleitungen (4) jeweils eine erste Entlüftungsleitung (4a) an einem Teil (109a), der von einem Reifenwulst-Zehenteil (104a) bis zu einem Reifenschulterzonenteil (110) entspricht, und eine zweite Entlüftungsleitung (4b) an einem Teil (109b), der von dem Reifenschulterzonenteil (110) zu einem Reifenkronenteil (102) entspricht, umfassen,
   die erste Entlüftungsleitung (4a) und die zweite Entlüftungsleitung (4b) eine Form von einem Rillenquerschnitt mit einer Breite W von mehr als oder gleich 0,5 mm und weniger als oder gleich 3,0 mm in einer Formseitenfläche des Reifenvulkanisations-Heizbalges und einer Tiefe von mehr als oder gleich 0,1 mm und weniger als oder gleich 2,0 mm von der Formseitenfläche des Reifenvulkanisations-Heizbalges aufweisen,
   die erste Entlüftungsleitung (4a) und die zweite Entlüftungsleitung (4b) eine Rillenquerschnittsfläche von mehr als oder gleich 0,025 mm$^2$ und weniger als oder gleich 6,0 mm$^2$ aufweisen,
   die erste Entlüftungsleitung (4a) einen Winkel α von mehr als oder gleich 60° und weniger als oder gleich 90° mit Bezug auf eine Tangente (T) an einen Teil, der dem Reifenwulst-Zehenteil (104a) entspricht, aufweist, und
   die zweite Entlüftungsleitung (4b) einen Winkel β von mehr als oder gleich 40° und weniger als oder gleich 90° mit Bezug auf die Tangente (T) an den Teil, der dem Reifenwulst-Zehenteil (104a) entspricht, aufweist, und
   der Winkel α und der Winkel β Beträge aufweisen, die α>β erfüllen.

2. Verfahren zum Herstellen eines Luftreifens (101) nach Anspruch 1, wobei die SIBS-Schicht (11a) mehr als oder gleich 0,5 Masse-% und weniger als oder gleich 40 Masse-% eines Polymers enthält, das durch Polymerisation einer Monomereinheit mit 4 Kohlenstoffatomen erhalten worden ist.

3. Verfahren zum Herstellen eines Luftreifens (101) nach Anspruch 1, wobei die Form des Rillenquerschnitts der ersten Entlüftungsleitung (4a) und der zweiten Entlüftungsleitung (4b) im Wesentlichen rechteckig, im Wesentlichen halbkreisförmig oder im Wesentlichen dreieckig ist.

4. Verfahren zum Herstellen eines Luftreifens (101) nach Anspruch 1, wobei das durch Polymerisation einer Monomereinheit mit 4 Kohlenstoffatomen erhaltene Polymer aus zumindest einem von Polybuten und Polyisobutylen zusammengesetzt ist.

5. Verfahren zum Herstellen eines Luftreifens (101) nach Anspruch 1, wobei das durch Polymerisation einer Monomereinheit mit 4 Kohlenstoffatomen erhaltene Polymer zumindest eines erfüllt von einem zahlengemittelten Molekulargewicht von mehr als oder gleich 300 und weniger als oder gleich 3000, einem gewichtsgemittelten Molekulargewicht von mehr als oder gleich 700 und weniger als oder gleich 100 000 und einem viskositätsgemittelten Molekulargewicht von mehr als oder gleich 20 000 und weniger als oder gleich 70 000.

6. Verfahren zum Herstellen eines Luftreifens (101) nach Anspruch 1, wobei die SIBS-Schicht (11a) auf einer radial am weitesten innen liegenden Seite des Luftreifens (101) angeordnet ist.

7. Verfahren zum Herstellen eines Luftreifens (101) nach Anspruch 1, wobei die SIS-Schicht (12b), die das durch Polymerisation einer Monomereinheit mit 4 Kohlenstoffatomen erhaltene Polymer enthält, oder die SIB-Schicht (13), die das durch Polymerisation einer Monomereinheit mit 4 Kohlenstoffatomen erhaltene Polymer enthält, in Kontakt mit einer Karkassschicht (106) des Luftreifens (101) angeordnet ist.

8. Verfahren zum Herstellen eines Luftreifens (101) nach Anspruch 1, wobei das Styrol-Isobutylen-Styrol-Triblockcopolymer ein gewichtsgemitteltes Molekulargewicht von mehr als oder gleich 50 000 und weniger als oder gleich 400 000 und einen Styroleinheitengehalt von mehr als oder gleich 10 Masse-% und weniger als oder gleich 30 Masse-% aufweist.

9. Verfahren zum Herstellen eines Luftreifens (101) nach Anspruch 1, wobei das Styrol-Isopren-Styrol-Triblockcopolymer ein gewichtsgemitteltes Molekulargewicht von mehr als oder gleich 100 000 und weniger als oder gleich 290 000 und einen Styroleinheitengehalt von mehr als oder gleich 10 Masse-% und weniger als oder gleich 30 Masse-% aufweist.

10. Verfahren zum Herstellen eines Luftreifens (101) nach Anspruch 1, wobei das Styrol-Isobutylen-Diblockcopolymer linear ist und ein gewichtsgemitteltes Molekulargewicht von mehr als oder gleich 40 000 und weniger als oder gleich 120 000 und einen Styroleinheitengehalt von mehr als oder gleich 10 Masse-% und weniger als oder gleich 35 Masse-% aufweist.

11. Luftreifen (101), der unter Verwendung eines Verfahrens zum Herstellen eines Luftreifens (101) nach Anspruch 1 hergestellt worden ist,

wobei der Luftreifen (101) einen Innerliner (109) enthält, der eine Mehrzahl von Entlüftungsleitungen (4) an seiner Innenfläche umfasst,
der Innerliner (109) eine SIBS-Schicht (11a) aufweist, die ein Styrol-Isobutylen-Styrol-Triblockcopolymer enthält, und
die SIBS-Schicht (11a) eine Dicke von mehr als oder gleich 0,05 mm und weniger als oder gleich 0,6 mm aufweist.

12. Luftreifen (101) nach Anspruch 11, wobei die SIBS-Schicht (11a) mehr als oder gleich 0,5 Masse-% und weniger als oder gleich 40 Masse-% eines Polymers enthält, das durch Polymerisation einer Monomereinheit mit 4 Kohlenstoffatomen erhalten worden ist.

13. Reifenvulkanisation-Heizbalg zum Herstellen eines Luftreifens, der einen Innerliner (109) umfasst, der ein Styrol-Isobutylen-Styrol-Triblockcopolymer enthält,

wobei der Reifenvulkanisations-Heizbalg eine Mehrzahl von Entlüftungsleitungen (4) umfasst,
wobei die Entlüftungsleitungen (4) jeweils eine erste Entlüftungsleitung (4a) an einem Teil, der von einem Reifenwulst-Zehenteil (104a) zu einem Reifenschulterzonenteil (110) entspricht, und eine zweite Entlüftungsleitung (4b) an einem Teil, der von dem Reifenschulterzonenteil (110) zu einem Reifenkronenteil (102) entspricht, umfassen,
die erste Entlüftungsleitung (4a) und die zweite Entlüftungsleitung (4b) eine Form von einem Rillenquerschnitt mit einer Breite W von mehr als oder gleich 0,5 mm und weniger als oder gleich 3,0 mm in einer Formseitenfläche des Reifenvulkanisations-Heizbalges und einer Tiefe von mehr als oder gleich 0,1 mm und weniger als oder gleich 2,0 mm von der Formseitenfläche des Reifenvulkanisations-Heizbalges aufweisen,
die erste Entlüftungsleitung (4a) und die zweite Entlüftungsleitung (4b) eine Rillenquerschnittsfläche von mehr als oder gleich 0,025 mm$^2$ und weniger als oder gleich 6,0 mm$^2$ aufweisen,
die erste Entlüftungsleitung (4a) einen Winkel $\alpha$ von mehr als oder gleich 60° und weniger als oder gleich 90° mit Bezug auf eine Tangente (T) an einen Teil, der dem Reifenwulst-Zehenteil (104a) entspricht, aufweist, und
die zweite Entlüftungsleitung (4b) einen Winkel $\beta$ von mehr als oder gleich 40° und weniger als oder gleich 90° mit Bezug auf eine Tangente (T) an den Teil, der dem Reifenwulst-Zehenteil (104a) entspricht, aufweist, und
der Winkel $\alpha$ und der Winkel $\beta$ Beträge aufweisen, die $\alpha > \beta$ erfüllen.

14. Reifenvulkanisations-Heizbalg nach Anspruch 13, wobei die Form des Rillenquerschnitts der Entlüftungsleitungen (4) im Wesentlichen rechteckig, im Wesentlichen halbkreisförmig oder im Wesentlichen dreieckig ist.

**Revendications**

1. Procédé pour fabriquer un bandage pneumatique (101) en utilisant une vessie de vulcanisation de pneumatique incluant une pluralité de conduits d'évent (4),

   dans lequel ledit bandage pneumatique (101) inclut un doublage intérieur (109) sur sa surface intérieure,
   ledit doublage intérieur (109) possède une couche SIBS (11a) contenant un copolymère tribloc styrène-isobutylène-styrène,
   ledit doublage intérieur (109) possède au moins une couche parmi une couche SIS (12b) contenant un copolymère tribloc styrène-isoprène-styrène et une couche SIB (13) contenant un copolymère dibloc styrène-isobutylène, en plus de ladite couche SIBS (11a),
   ladite couche SIBS (11a) a une épaisseur supérieure ou égale à 0,05 mm et inférieure ou égale à 0,6 mm,
   ladite couche SIS (12b) et ladite couche SIB (13) ont une épaisseur totale supérieure ou égale à 0,01 mm et inférieure ou égale à 0,3 mm, et
   au moins une couche parmi ladite couche SIBS (11a), ladite couche SIS (12b), et ladite couche SIB (13) contient une quantité supérieure ou égale à 0,5 % en masse et inférieure ou égale à 40 % en masse d'un polymère obtenu par polymérisation d'une unité monomère ayant quatre atomes de carbone,
   lesdits conduits d'évent (4) incluent chacun un premier conduit d'évent (4a) au niveau d'une partie (109a) correspondante depuis une partie de bout de talon du pneumatique (104a) jusqu'à une partie de contrefort du pneumatique (110), et un second conduit d'évent (4b) au niveau d'une partie (109b) correspondante depuis ladite partie de contrefort de pneumatique (110) jusqu'à une partie de couronne du pneumatique (102),
   ledit premier conduit d'évent (4a) et ledit second conduit d'évent (4b) ont la forme d'une gorge à section transversale ayant une largeur W supérieure ou égale à 0,5 mm et inférieure ou égale à 3,0 mm dans une surface côté moule de la vessie de vulcanisation du pneumatique, et une profondeur supérieure ou égale à 0,1 mm et inférieure ou égale à 2,0 mm depuis la surface côté moule de la vessie de vulcanisation de pneumatique,
   ledit premier conduit d'évent (4a) et ledit second conduit d'évent (4b) ont une aire de section transversale de rainure supérieure ou égale à 0,025 mm² et inférieure ou égale à 6,0 mm²,
   ledit premier conduit d'évent (4a) présente un angle $\alpha$ supérieur ou égal à 60° et inférieur ou égal à 90° par rapport à une tangente (T) à une partie correspondant à ladite partie de bout de talon de pneumatique (104a), et ledit second conduit d'évent (4b) présente un angle $\beta$ supérieur ou égal à 40° et inférieur ou égal à 90° par rapport à la tangente (T) à la partie correspondant à ladite partie de bout de talon de pneumatique (104a), et ledit angle $\alpha$ et ledit angle $\beta$ ont des valeurs qui satisfont la relation $\alpha > \beta$.

2. Procédé pour fabriquer un bandage pneumatique (101) selon la revendication 1, dans lequel ladite couche SIBS (11a) contient une quantité supérieure ou égale à 0,5 % en masse et inférieure ou égale à 40 % en masse d'un polymère obtenu par polymérisation d'une unité monomère ayant quatre atomes de carbone.

3. Procédé pour fabriquer un bandage pneumatique (101) selon la revendication 1, dans lequel la forme de la section transversale de rainure dudit premier conduit d'évent (4a) et dudit second conduit d'évent (4b) est sensiblement rectangulaire, sensiblement semi-circulaire, ou sensiblement triangulaire.

4. Procédé pour fabriquer un bandage pneumatique (101) selon la revendication 1, dans lequel ledit polymère obtenu par polymérisation d'une unité monomère ayant quatre atomes de carbone est composé d'au moins un parmi polybutène et polyisobutylène.

5. Procédé pour fabriquer un bandage pneumatique (101) selon la revendication 1, dans lequel ledit polymère obtenu par polymérisation d'une unité monomère ayant quatre atomes de carbone satisfait au moins une des conditions suivantes : un poids moléculaire moyen d'un nombre supérieur ou égal à 300 et inférieur ou égal à 3000, un poids moléculaire moyen pondéral supérieur ou égal à 700 et inférieur ou égal à 100 000, et un poids moléculaire moyen de viscosité supérieure ou égale à 20 000 et inférieure ou égale à 70 000.

6. Procédé pour fabriquer un bandage pneumatique (101) selon la revendication 1, dans lequel ladite couche SIBS (11a) est agencée au niveau d'un côté radialement tout à fait à l'intérieur du bandage pneumatique (101).

7. Procédé pour fabriquer un bandage pneumatique (101) selon la revendication 1, dans lequel la couche SIS (12b) contenant ledit polymère obtenu par polymérisation d'une unité monomère ayant quatre atomes de carbone ou la couche SIB (13) contenant ledit polymère obtenu par polymérisation d'une unité monomère ayant quatre atomes de carbone est agencée en contact avec une couche de carcasse (106) du bandage pneumatique (101).

8. Procédé pour fabriquer un bandage pneumatique (101) selon la revendication 1, dans lequel ledit copolymère tribloc styrène-isobutylène-styrène a un poids moléculaire moyen pondéral supérieur ou égal à 50 000 et inférieur ou égal à 400 000, et une teneur en unité styrène supérieure ou égale à 10 % en masse et inférieure ou égale à 30 % en masse.

9. Procédé pour fabriquer un bandage pneumatique (101) selon la revendication 1, dans lequel ledit copolymère tribloc styrène-isoprène-styrène a un poids moléculaire moyen pondéral supérieur ou égal à 100000 et inférieur ou égal à 290000 et une teneur en unités styrène supérieure ou égale à 10 % en masse et inférieure ou égale à 30 % en masse.

10. Procédé pour fabriquer un bandage pneumatique (101) selon la revendication 1, dans lequel ledit copolymère dibloc styrène-isobutylène est linéaire et présente un poids moléculaire moyen pondéral supérieur ou égal à 40 000 et inférieur ou égal à 120 000 et une teneur en unités styrène supérieure ou égale à 10 % en masse et inférieure ou égale à 35 % en masse.

11. Bandage pneumatique (101) fabriqué en utilisant un procédé pour fabriquer un bandage pneumatique (101) selon la revendication 1,
dans lequel ledit bandage pneumatique (101) inclut un doublage intérieur (109) incluant une pluralité de conduits d'évent (4) sur sa surface intérieure, ledit doublage intérieur (109) possède une couche SIBS contenant un copolymère tribloc styrène-isobutylène-styrène, et
ladite couche SIBS (11a) a une épaisseur supérieure ou égale à 0,05 mm et inférieure ou égale à 0,6 mm.

12. Bandage pneumatique (101) selon la revendication 11, dans lequel ladite couche SIBS (11a) contient une quantité supérieure ou égale à 0,5 % en masse et inférieure ou égale à 40 % en masse d'un polymère obtenu par polymérisation d'une unité monomère ayant quatre atomes de carbone.

13. Vessie de vulcanisation de pneumatique pour fabriquer un bandage pneumatique incluant un doublage intérieur (109) contenant un copolymère tribloc styrène-isobutylène-styrène,
dans laquelle ladite vessie de vulcanisation de pneumatique inclut une pluralité de conduits d'évent (4),
lesdits conduit d'évent (4) incluent chacun un premier conduit d'évent (4a) au niveau d'une partie correspondante depuis une partie de bout de talon de pneumatique (104a) jusqu'à une partie de contrefort de pneumatique (110), et un second conduit d'évent (4b) au niveau d'une partie correspondante depuis ladite partie de contrefort de pneumatique (110) jusqu'à une partie de couronne de pneumatique (102),
ledit premier conduit d'évent (4a) et ledit second conduit d'évent (4) b) ont la forme d'une rainure avec une section transversale ayant une largeur W supérieure ou égale à 0,5 mm et inférieure ou égale à 3,0 mm dans une surface côté moule de la vessie de vulcanisation du pneumatique, et une profondeur supérieure ou égale à 0,1 mm et inférieure ou égale à 2,0 mm depuis la surface côté moule de la vessie de vulcanisation de pneumatique,
ledit premier conduit d'évent (4a) et ledit second conduit d'évent (4b) ont une superficie de section transversale de rainure supérieure ou égale à 0,025 mm$^2$ et inférieure ou égale à 6,0 mm$^2$,
ledit premier conduit d'évent (4a) présente un angle $\alpha$ supérieur ou égal à 60° et inférieur ou égal à 90° par rapport à une tangente (T) à une partie correspondante à ladite partie de bout de talon de pneumatique (104a), et ledit second conduit d'évent (4b) présente un angle $\beta$ supérieur ou égal à 40° et inférieur ou égal à 90° par rapport à la tangente (T) à la partie correspondant à ladite partie de bout de talon de pneumatique (104a), et ledit angle $\alpha$ ledit angle $\beta$ ont des valeurs qui satisfont la relation $\alpha > \beta$.

14. Vessie de vulcanisation de pneumatique selon la revendication 13, dans lequel la forme de la section transversale de rainure desdits conduits d'évent (4) est sensiblement rectangulaire, sensiblement semi-circulaire, ou sensiblement triangulaire.

FIG.1

FIG.2

FIG.3

# FIG.4

(a)

(b)

(c)

(d)

(e)

# FIG.5

(a)

(b)

(c)

(d)

(e)

(f)

# FIG.6

(a)

(b)

FIG.7

10a

11a

FIG.8

10b

12b

11b

FIG.9

10c

13c

11c

FIG.10

10d

13d

12d

11d

FIG.11

10e

12e

13e

11e

**REFERENCES CITED IN THE DESCRIPTION**

**Patent documents cited in the description**

- JP 2008012751 A
- JP 2009143169 A
- EP 1798075 A2
- WO 2009007064 A1
- JP 2010527839 A
- JP 2000317940 A
- JP 62048704 A
- JP 64062308 B
- US 4946899 A
- US 5219948 A
- JP 3174403 A
- WO 2005033035 A